# FASCICULE DE BREVET EUROPEEN

(11) **EP 3 805 503 B1**
(45) Date de publication et mention de la délivrance du brevet: **18.10.2023**
(21) Numéro de dépôt: 20200823.1
(22) Date de dépôt: 08.10.2020
(51) Int. Cl.: E05F 15/40, E05F 15/41, E05F 15/643, H02H 7/085

(54) **PROCÉDÉ DE COMMANDE EN FONCTIONNEMENT D'UN DISPOSITIF D'ENTRAÎNEMENT MOTORISÉ D'UNE FENÊTRE COULISSANTE POUR UN BÂTIMENT, FENÊTRE ET INSTALLATION DOMOTIQUE ASSOCIÉES**
VERFAHREN ZUR STEUERUNG DER FUNKTION EINES MOTORISCHEN ANTRIEBS EINES GEBÄUDESCHIEBEFENSTERES, IN VERBINDUNG MIT EINEM FENSTER UND EINEM HAUSAUTOMATIONSSYSTEM
METHOD FOR CONTROLLING THE OPERATION OF A MOTOR DRIVE OF A SLIDING WINDOW FOR A BUILDING, ASSOCIATED WINDOW AND HOME AUTOMATION FACILITY

(30) Priorité: 09.10.2019 FR 1911202
(43) Date de publication de la demande: 14.04.2021
(73) Titulaire: Somfy Activites SA, 74300 Cluses (FR)
(72) Inventeur: BUFFLIER, Nadège, 74300 Cluses (FR); EICHLER, Mickaël, 74300 Cluses (FR); BRUNO, Serge, 74300 Cluses (FR); JACQUIN, Christophe, 74300 Cluses (FR)
(74) Mandataire: Lavoix

(56) Documents cités:
- FR-A1- 2 854 192
- US-A1- 2019 162 009
- US-B2- 10 221 609

## Description

La présente invention concerne un procédé de commande en fonctionnement d'un dispositif d'entraînement motorisé d'une fenêtre coulissante pour un bâtiment, de sorte à déplacer un ouvrant par rapport à un cadre dormant de la fenêtre suivant un mouvement de coulissement.

La présente invention concerne également une fenêtre coulissante pour un bâtiment incorporant un tel dispositif d'entraînement motorisé, ainsi qu'une installation domotique comprenant une telle fenêtre coulissante.

De manière générale, la présente invention concerne le domaine des fenêtres coulissantes comprenant un dispositif d'entraînement motorisé mettant en mouvement un ouvrant par rapport à un cadre dormant suivant un mouvement de coulissement, entre au moins une première position et au moins une deuxième position.

Un dispositif d'entraînement motorisé d'une telle fenêtre coulissante comprend un actionneur électromécanique.

On connaît déjà des fenêtres coulissantes pour un bâtiment comprenant un cadre dormant, un ouvrant et un dispositif d'entraînement motorisé configuré pour déplacer par coulissement l'ouvrant par rapport au cadre dormant. Le dispositif d'entraînement motorisé comprend un actionneur électromécanique et une unité électronique de contrôle. L'actionneur électromécanique comprend un moteur électrique. L'unité électronique de contrôle comprend un dispositif de mesure d'une valeur d'intensité d'un courant électrique traversant le moteur électrique. De telles fenêtres coulissantes sont connues du document US 2019/162 009 A1.

Cependant, un ou plusieurs points durs peuvent être rencontrés sur une course de déplacement de l'ouvrant par rapport au cadre dormant, aussi bien en ouverture qu'en fermeture. Ces points durs sont dus à des défauts de la fenêtre, tels que, par exemple, des frottements de l'ouvrant par rapport à un rail de coulissement du cadre dormant ou à un désalignement des organes d'un dispositif de verrouillage en position fermée de l'ouvrant par rapport au cadre dormant.

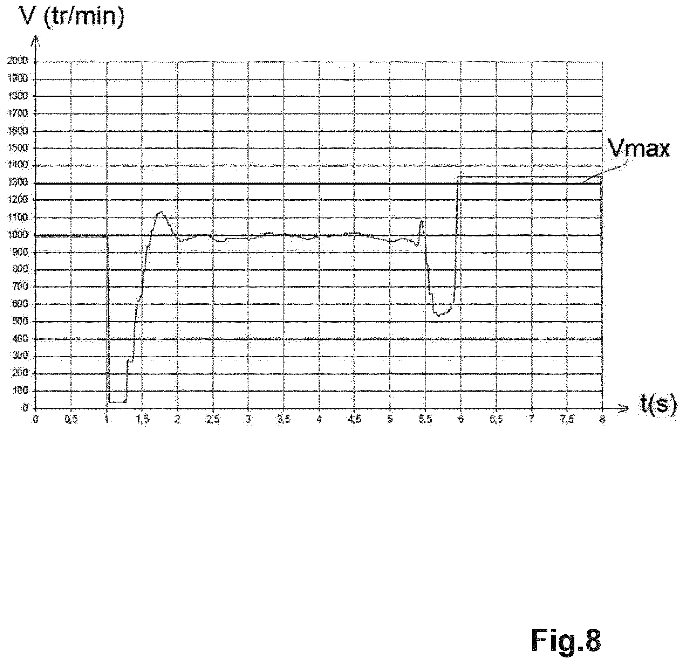

Au cours d'un déplacement de l'ouvrant par rapport au cadre dormant, une augmentation d'une vitesse de déplacement de l'ouvrant par rapport au cadre dormant, en particulier brusque, peut être constatée, à un moment de relâchement de l'ouvrant par rapport au cadre dormant lors du franchissement de l'un de ces points durs, comme illustré à la figure 8.

Ainsi, un arrêt intempestif du déplacement de l'ouvrant par rapport au cadre dormant peut être engendré lorsque la vitesse de déplacement de l'ouvrant par rapport au cadre dormant dépasse une valeur seuil de vitesse maximale, bien que la vitesse de déplacement de l'ouvrant par rapport au cadre dormant puisse être asservie au moyen de l'unité électronique de contrôle. Un tel asservissement en vitesse n'est donc pas assez réactif.

Par conséquent, la vitesse de déplacement de l'ouvrant par rapport au cadre dormant, qui est normalement régulée au moyen de l'unité électronique de contrôle à une consigne de vitesse inférieure à la valeur seuil de vitesse maximale, peut dépasser celle-ci suite au franchissement d'un point dur sur la course de déplacement de l'ouvrant par rapport au cadre dormant.

La valeur seuil de vitesse maximale est déterminée de sorte à respecter une norme EN-60335-2-103 d'anti-écrasement sur la course de déplacement de l'ouvrant par rapport au cadre dormant et lors d'un verrouillage et d'un déverrouillage de l'ouvrant par rapport au cadre dormant dans une position fermée.

En outre, lors du franchissement de la valeur seuil de vitesse maximale, une alimentation en énergie électrique du moteur électrique de l'actionneur électromécanique est arrêtée, de sorte à garantir la sécurité des utilisateurs et à respecter la norme mentionnée précédemment.

Ainsi, un tel arrêt du moteur électrique de l'actionneur électromécanique peut empêcher le verrouillage de l'ouvrant par rapport au cadre dormant dans la position fermée ou le déverrouillage de l'ouvrant par rapport au cadre dormant à partir de la position fermée ou encore provoquer un arrêt de l'ouvrant par rapport au cadre dormant au cours de la course de déplacement de l'ouvrant par rapport au cadre dormant.

Par conséquent, un tel fonctionnement du dispositif d'entraînement motorisé peut être perturbant pour les utilisateurs, puisqu'un ordre de commande de déplacement de l'ouvrant par rapport au cadre dormant n'est pas exécuté complètement mais arrêté en pleine exécution, à cause d'un point dur rencontré sur la course de déplacement de l'ouvrant par rapport au cadre dormant.

On connaît également le document FR 2 854 192 A1 qui décrit un procédé de commande en fonctionnement d'un dispositif d'entraînement motorisé d'une barrière mobile. Le dispositif d'entraînement motorisé est configuré pour déplacer la barrière mobile. Le dispositif d'entraînement motorisé comprend un actionneur électromécanique et une unité électronique de contrôle. L'actionneur électromécanique comprend un moteur électrique. L'unité électronique de contrôle comprend un dispositif de mesure d'une valeur d'intensité d'un courant électrique traversant le moteur électrique. Le procédé comprend une étape de commande du moteur électrique au moyen d'une tension d'alimentation, de sorte à déplacer la barrière mobile. Le procédé comprend, au cours du déplacement de la barrière mobile, une étape de mesure de valeurs d'intensité du courant électrique traversant le moteur électrique par le dispositif de mesure. Le procédé comprend, lors du déplacement de la barrière mobile, une étape de détermination de présence ou d'absence d'un point dur, en fonction d'un accroissement des valeurs d'intensité du courant électrique mesurées, lors de l'étape de mesure. Le procédé comprend, suite à la détermination d'un point dur, lors de l'étape de détermination, une étape de modification de la commande du moteur électrique en limitant la tension d'alimentation, pendant une période de franchissement du point dur déterminé.

On connaît également le document US 10 221 609 B2 qui décrit un procédé de commande en fonctionnement d'un dispositif d'entraînement motorisé d'une porte battante pour un bâtiment. La porte comprend un cadre dormant et un ouvrant. Le dispositif d'entraînement motorisé est configuré pour déplacer l'ouvrant par rapport au cadre dormant. Le dispositif d'entraînement motorisé comprend un actionneur électromécanique. L'actionneur électromécanique comprend un moteur électrique et une unité électronique de contrôle. L'unité électronique de contrôle comprend un dispositif de mesure d'une valeur d'intensité d'un courant électrique traversant le moteur électrique. Le procédé comprend une étape de commande du moteur électrique au moyen d'un courant électrique d'alimentation et d'une mesure de vitesse de déplacement de l'ouvrant, de sorte à déplacer l'ouvrant par rapport au cadre dormant, et, au cours du déplacement de l'ouvrant par rapport au cadre dormant, une étape de mesure de valeurs d'intensité du courant électrique traversant le moteur électrique par le dispositif de mesure.

La présente invention a pour but de résoudre les inconvénients précités et de proposer un procédé de commande en fonctionnement d'un dispositif d'entraînement motorisé d'une fenêtre coulissante pour un bâtiment, une fenêtre coulissante pour un bâtiment comprenant un tel dispositif d'entraînement motorisé, ainsi qu'une installation domotique comprenant une telle fenêtre coulissante, permettant d'éviter une augmentation, en particulier trop importante, d'une vitesse de déplacement d'un ouvrant par rapport à un cadre dormant de la fenêtre et, par conséquent, un arrêt intempestif, suite au franchissement d'un point dur sur une course de déplacement de l'ouvrant par rapport au cadre dormant.

A cet effet, la présente invention vise, selon un premier aspect, un procédé de commande en fonctionnement d'un dispositif d'entraînement motorisé d'une fenêtre coulissante pour un bâtiment, la fenêtre coulissante comprenant au moins :
- un cadre dormant, et
- un ouvrant,

le dispositif d'entraînement motorisé étant configuré pour déplacer par coulissement l'ouvrant par rapport au cadre dormant,
le dispositif d'entraînement motorisé comprenant au moins :
   - un actionneur électromécanique, l'actionneur électromécanique comprenant au moins un moteur électrique, et
   - une unité électronique de contrôle,
l'unité électronique de contrôle comprenant au moins :
   - un dispositif de mesure d'une valeur d'intensité d'un courant électrique traversant le moteur électrique.

Le procédé comprend au moins les étapes suivantes :
- commande du moteur électrique au moyen d'une tension d'alimentation, de sorte à déplacer l'ouvrant par rapport au cadre dormant, et
- au cours du déplacement de l'ouvrant par rapport au cadre dormant, mesure de valeurs d'intensité du courant électrique traversant le moteur électrique par le dispositif de mesure.

Selon l'invention, le procédé comprend au moins les étapes suivantes :
- lors du déplacement de l'ouvrant par rapport au cadre dormant, détermination de présence ou d'absence d'un point dur, en fonction d'une évolution des valeurs d'intensité du courant électrique mesurées, lors de l'étape de mesure, et
- suite à la détermination d'un point dur, lors de l'étape de détermination, modification de la commande du moteur électrique en limitant la tension d'alimentation, de sorte à maintenir une vitesse de rotation d'un arbre de sortie du moteur électrique en dessous d'une valeur seuil de vitesse maximale.

En outre, le point dur est déterminé, lors de l'étape de détermination, lorsque l'évolution des valeurs d'intensité du courant électrique mesurées, lors de l'étape de mesure, présente un pic puis une chute des valeurs d'intensité du courant électrique.

Ainsi, le procédé permet de limiter une augmentation d'une vitesse de déplacement de l'ouvrant par rapport au cadre dormant de la fenêtre et, par conséquent, un arrêt intempestif, suite au franchissement d'un point dur sur une course de déplacement de l'ouvrant par rapport au cadre dormant.

De cette manière, la modification de la commande du moteur électrique, lors de l'étape de modification, permet d'éviter un dépassement de la valeur seuil de vitesse maximale.

Selon une caractéristique avantageuse de l'invention, le point dur est déterminé, lors de l'étape de détermination, lorsque la chute des valeurs d'intensité du courant électrique est supérieure ou égale à une valeur seuil de courant prédéterminée pendant une période de temps prédéterminée.

Selon une autre caractéristique avantageuse de l'invention, suite à l'étape de commande du moteur électrique, une mesure d'une valeur d'intensité du courant électrique est mise en oeuvre périodiquement, lors de l'étape de mesure.

Selon une autre caractéristique avantageuse de l'invention, la tension d'alimentation limitée, lors de l'étape de modification de la commande du moteur électrique, est supérieure ou égale à une valeur seuil de tension prédéterminée, de sorte à maintenir une valeur d'intensité minimale du courant électrique circulant dans des bobines du moteur électrique.

Selon une autre caractéristique avantageuse de l'invention, l'étape de mesure des valeurs d'intensité du courant électrique est mise en oeuvre suite à l'écoulement d'une période de temps prédéterminée démarrant à partir d'un instant de démarrage du moteur électrique.

Selon une autre caractéristique avantageuse de l'invention, le procédé comprend, en outre, au moins les étapes suivantes :
- mesure d'une valeur de vitesse de rotation d'un arbre de sortie du moteur électrique,
- comparaison de la valeur de vitesse de rotation mesurée, lors de l'étape de mesure, à la valeur seuil de vitesse maximale,
- dans le cas où la valeur de vitesse de rotation mesurée, lors de l'étape de mesure, est supérieure ou égale à la valeur seuil de vitesse maximale, détermination d'une survitesse de rotation de l'arbre de sortie du moteur électrique, et
- suite à la détermination de la survitesse de rotation, lors de l'étape de détermination, et en l'absence de détermination d'un point dur, lors de l'étape de détermination, arrêt du moteur électrique.

Selon une autre caractéristique avantageuse de l'invention, suite à l'arrêt du moteur électrique, lors de l'étape d'arrêt, le procédé comprend une étape de redémarrage du moteur électrique, de sorte à déplacer l'ouvrant par rapport au cadre dormant.

Selon une autre caractéristique avantageuse de l'invention, le procédé comprend, en outre, au moins l'étape suivante, préalable à l'étape de redémarrage :
- comptage d'un nombre de déterminations de la survitesse de rotation mises en oeuvre successivement au cours d'un déplacement de l'ouvrant par rapport au cadre dormant,
alors que l'étape de redémarrage du moteur électrique a lieu tant que le nombre de déterminations de la survitesse de rotation, compté à l'étape de comptage, est inférieur à une valeur seuil de comptage prédéterminée.

Selon une autre caractéristique avantageuse de l'invention, dans le cas où le nombre de déterminations de la survitesse de rotation est égal à la valeur seuil de comptage prédéterminée, le procédé comprend une étape de signalement d'un défaut de fonctionnement de la fenêtre.

La présente invention vise, selon un deuxième aspect, une fenêtre coulissante pour un bâtiment,
la fenêtre comprenant au moins :
   - un cadre dormant,
   - un ouvrant, et
   - un dispositif d'entraînement motorisé configuré pour déplacer par coulissement l'ouvrant par rapport au cadre dormant,
le dispositif d'entraînement motorisé comprenant au moins :
   - un actionneur électromécanique, l'actionneur électromécanique comprenant au moins un moteur électrique, et
   - une unité électronique de contrôle,
l'unité électronique de contrôle comprenant au moins :
   - un dispositif de mesure d'une valeur d'intensité d'un courant électrique traversant le moteur électrique.

L'unité électronique de contrôle du dispositif d'entraînement motorisé est configurée pour mettre en oeuvre le procédé selon l'invention et tel que mentionné ci-dessus.

Cette fenêtre coulissante présente des caractéristiques et avantages analogues à ceux décrits précédemment, en relation avec le procédé de commande en fonctionnement d'un dispositif d'entraînement motorisé d'une fenêtre coulissante selon l'invention.

Selon une caractéristique avantageuse de l'invention, le dispositif d'entraînement motorisé comprend, en outre, un bras d'entraînement. Le bras d'entraînement est configuré pour être relié, d'une part, à un cadre de l'ouvrant et, d'autre part, à un élément flexible. Le bras d'entraînement et l'élément flexible sont configurés pour entraîner en déplacement l'ouvrant par rapport au cadre dormant, lorsque l'actionneur électromécanique est activé électriquement.

La présente invention vise, selon un troisième aspect, une installation domotique comprenant une fenêtre coulissante conforme à l'invention, telle que mentionnée ci-dessus.

Cette installation domotique présente des caractéristiques et avantages analogues à ceux décrits précédemment, en relation avec la fenêtre coulissante selon l'invention.

D'autres particularités et avantages de l'invention apparaîtront encore dans la description ci-après.

Aux dessins annexés, donnés à titre d'exemples non limitatifs :
[Fig 1] la figure 1 est une vue schématique en perspective d'une fenêtre coulissante conforme à un mode de réalisation de l'invention, où un premier ouvrant est dans une position complètement ouverte par rapport à un cadre dormant ;
[Fig 2] la figure 2 est une vue analogue à la figure 1, où le premier ouvrant est dans une position fermée par rapport au cadre dormant et où une partie d'un coffre logeant un dispositif d'entraînement motorisé a été ôtée, afin de faciliter la lecture de la figure 2 ;
[Fig 3] la figure 3 est une vue schématique en perspective, d'une partie de la fenêtre coulissante illustrée aux figures 1 et 2, illustrant un bras d'entraînement du dispositif d'entraînement motorisé de la fenêtre, où un élément d'habillage recouvrant en partie le bras d'entraînement a été ôté, afin de faciliter la lecture de la figure 3 ;
[Fig 4] la figure 4 est une vue schématique de face d'une partie de la fenêtre coulissante illustrée aux figures 1 et 2, illustrant le bras d'entraînement et un dispositif de commande de verrouillage, où un capot du bras d'entraînement a été ôté, afin de faciliter la lecture de la figure 4 ;
[Fig 5] la figure 5 est un schéma électrique d'un actionneur électromécanique du dispositif d'entraînement motorisé, tel qu'illustré aux figures 2 à 4, comprenant un moteur électrique et une unité électronique de contrôle ;
[Fig 6] la figure 6 est un schéma bloc d'un algorithme d'un procédé de commande du dispositif d'entraînement motorisé de la fenêtre coulissante, telle qu'illustrée aux figures 1 à 4, conforme à un mode de réalisation de l'invention ;
[Fig 7] la figure 7 est un graphique représentant une évolution de valeurs d'intensité d'un courant électrique traversant le moteur électrique, dans le cas où le procédé de commande selon l'invention n'est pas mis en oeuvre, c'est-à-dire en l'absence de traitement d'un point dur rencontré au cours d'un déplacement du premier ouvrant par rapport au cadre dormant ;
[Fig 8] la figure 8 est un graphique représentant une évolution de valeurs de vitesse de rotation d'un arbre de sortie du moteur, dans le cas où le procédé de commande selon l'invention n'est pas mis en oeuvre ;
[Fig 9] la figure 9 est un graphique analogue à celui de la figure 7, dans le cas où le procédé de commande selon l'invention est mis en oeuvre, c'est-à-dire en présence d'un traitement d'un point dur rencontré au cours d'un déplacement du premier ouvrant par rapport au cadre dormant ; et
[Fig 10] la figure 10 est un graphique analogue à celui de la figure 8, dans le cas où le procédé de commande selon l'invention est mis en oeuvre.

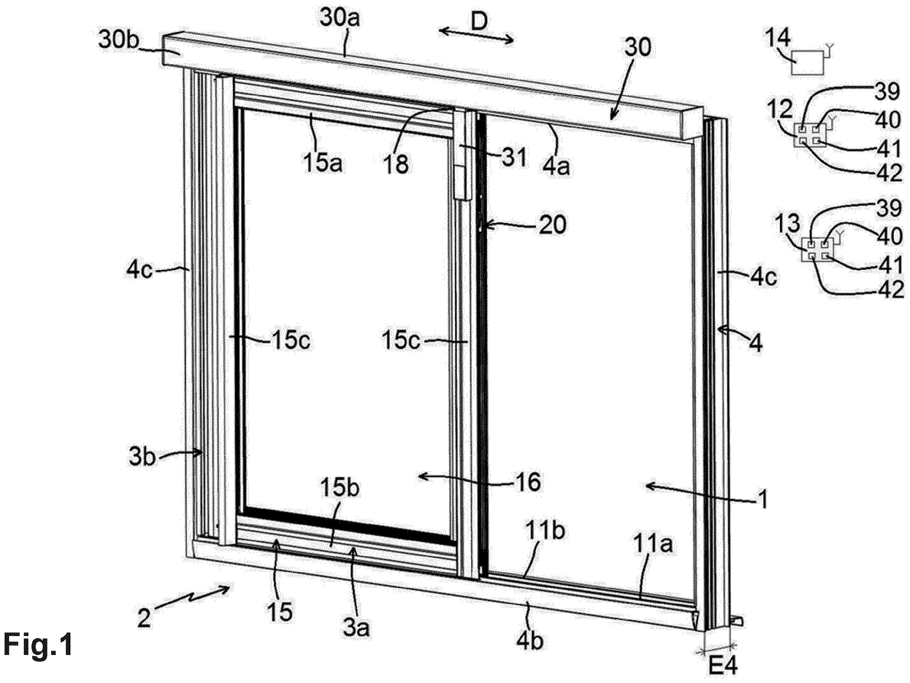

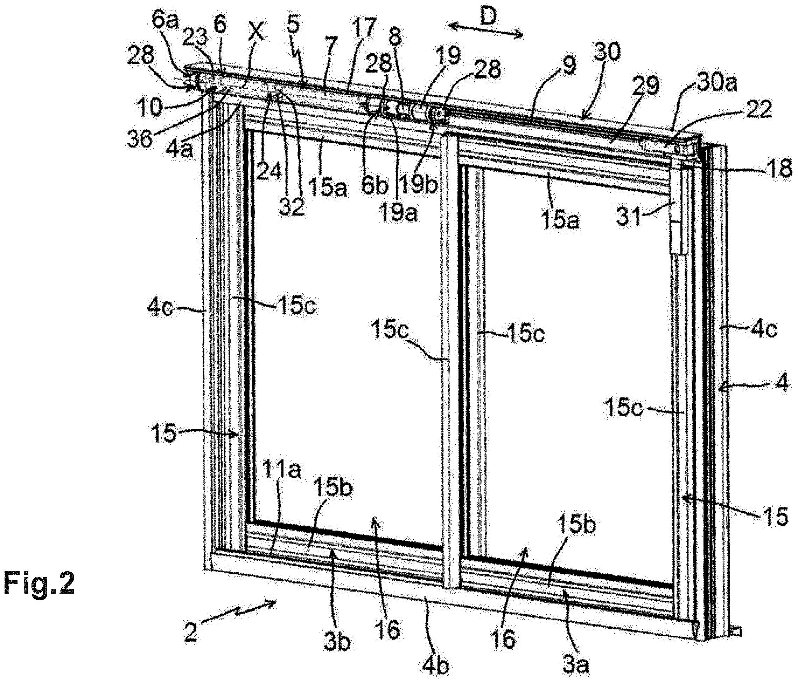

On décrit tout d'abord, en référence aux figures 1 et 2, une installation domotique conforme à l'invention et installée dans un bâtiment comportant une ouverture 1, dans laquelle est disposée une fenêtre coulissante 2, conforme à un mode de réalisation de l'invention.

La fenêtre coulissante 2 peut également être appelée baie coulissante.

La présente invention s'applique aux fenêtres coulissantes et aux portes-fenêtres coulissantes, équipées ou non d'un vitrage transparent.

La fenêtre 2 comprend au moins un ouvrant 3a, 3b et un cadre dormant 4.

Ici et tel qu'illustré aux figures 1 et 2, la fenêtre 2 comprend un premier ouvrant 3a et un deuxième ouvrant 3b.

La fenêtre 2 comprend, en outre, un dispositif d'entraînement motorisé 5 pour déplacer par coulissement un ouvrant 3a, 3b par rapport au cadre dormant 4, tel qu'illustré à la figure 2.

Ici, le dispositif d'entraînement motorisé 5 est configuré pour déplacer par coulissement un seul des premier et deuxième ouvrants 3a, 3b par rapport au cadre dormant 4, en particulier le premier ouvrant 3a.

Ici et tel qu'illustré aux figures 1 et 2, le deuxième ouvrant 3b est mobile manuellement, en particulier par l'action d'un utilisateur exerçant un effort sur une poignée, non représentée, du deuxième ouvrant 3b.

En variante, le deuxième ouvrant 3b est fixe.

Le nombre d'ouvrants de la fenêtre n'est pas limitatif et peut être différent, en particulier égal à un ou à trois.

Chaque ouvrant 3a, 3b comprend un cadre 15. Chaque ouvrant 3a, 3b peut également comprendre au moins une vitre 16 disposée dans le cadre 15.

Le nombre de vitres de l'ouvrant n'est pas limitatif et peut être différent, en particulier égal à deux ou plus.

Le cadre 15 de chaque ouvrant 3a, 3b comporte une traverse supérieure 15a, une traverse inférieure 15b et des premier et deuxième montants latéraux 15c, dans une configuration assemblée de la fenêtre 2 par rapport au bâtiment, comme illustré aux figures 1 et 2.

Le premier montant latéral 15c du cadre 15 du premier ouvrant 3a est opposé au deuxième montant latéral 15c du cadre 15 du premier ouvrant 3a.

Le cadre dormant 4 comporte une traverse supérieure 4a, une traverse inférieure 4b et des premier et deuxième montants latéraux 4c, dans la configuration assemblée de la fenêtre 2 par rapport au bâtiment, comme illustré aux figures 1 et 2.

Le premier montant latéral 4c du cadre dormant 4 est opposé au deuxième montant latéral 4c du cadre dormant 4.

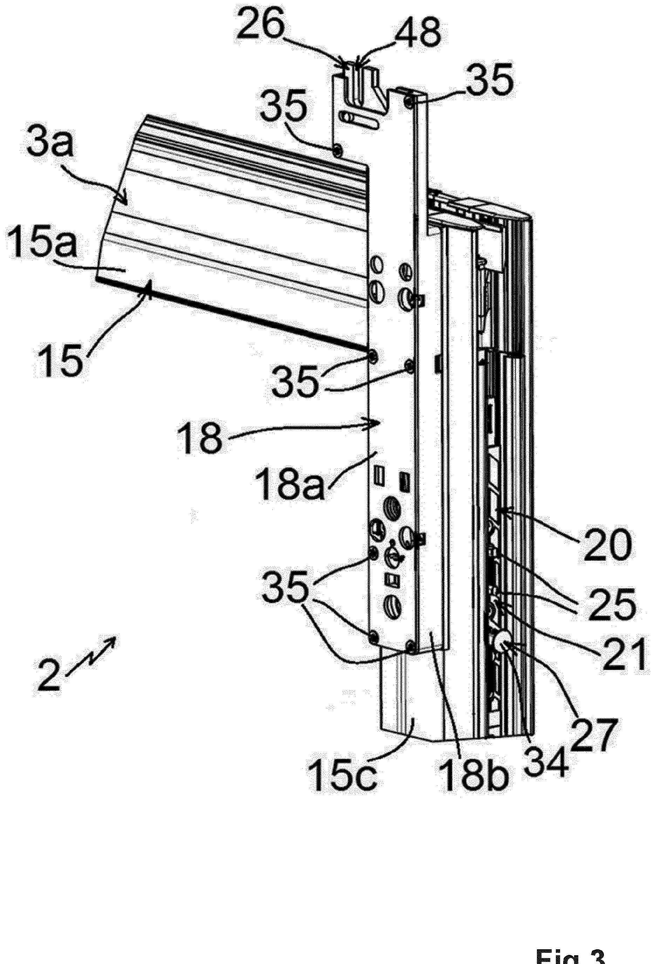

Avantageusement, la fenêtre 2 comprend, en outre, un système de ferrure 20 ménagé entre le cadre dormant 4 et chaque ouvrant 3a, 3b, comme illustré à la figure 3.

Le système de ferrure 20 de la fenêtre coulissante 2 permet de verrouiller sélectivement chaque ouvrant 3a, 3b par rapport au cadre dormant 4, alors que cet ouvrant 3a, 3b peut coulisser selon une direction de coulissement D, dans l'exemple horizontale, dans la configuration assemblée de la fenêtre 2 par rapport au bâtiment, comme illustré aux figures 1 et 2.

Ici, la traverse supérieure 4a du cadre dormant 4 comprend un premier rail de coulissement, non représenté, du premier ouvrant 3a et un deuxième rail de coulissement, non représenté, du deuxième ouvrant 3b. En outre, la traverse inférieure 4b du cadre dormant 4 comprend un premier rail de coulissement 11a du premier ouvrant 3a et un deuxième rail de coulissement 11b du deuxième ouvrant 3b.

Ainsi, chacune des traverses supérieure 4a et inférieure 4b du cadre dormant 4 comprend un premier rail de coulissement 11a ou équivalent du premier ouvrant 3a et un deuxième rail de coulissement 11b ou équivalent du deuxième ouvrant 3b.

De cette manière, les premier et deuxième ouvrants 3a, 3b sont configurés pour se déplacer respectivement le long des premier et deuxième rails de coulissement 11a, 11b et équivalents.

En pratique, les premier et deuxième rails de coulissement 11a, 11b et équivalents sont disposés parallèlement l'un par rapport à l'autre. En outre, les premier et deuxième rails de coulissement 11a, 11b et équivalents sont décalés l'un par rapport à l'autre suivant une épaisseur E4 du cadre dormant 4.

Avantageusement, la fenêtre 2 comprend des éléments de coulissement, non représentés, permettant le déplacement de chaque ouvrant 3a, 3b par rapport au cadre dormant 4. Les éléments de coulissement sont disposés au niveau des premier et deuxième rails de coulissement 11a, 11b de la traverse inférieure 4b.

En pratique, les éléments de coulissement peuvent comprendre, par exemple, des roulettes disposées sous les premier et deuxième ouvrants 3a, 3b. Ces roulettes sont configurées pour rouler sur les premier et deuxième rails de coulissement 11a, 11b de la traverse inférieure 4b.

Une position d'ouverture par coulissement, partielle ou maximale, de chaque ouvrant 3a, 3b par rapport au cadre dormant 4 correspond à une position d'aération du bâtiment.

Le dispositif d'entraînement motorisé 5 permet de déplacer automatiquement par coulissement le premier ouvrant 3a par rapport au cadre dormant 4, en particulier entre la position d'ouverture maximale par coulissement du premier ouvrant 3a par rapport au cadre dormant 4 et la position fermée du premier ouvrant 3a par rapport au cadre dormant 4.

Le dispositif d'entraînement motorisé 5 comprend au moins un actionneur électromécanique 6. L'actionneur électromécanique 6 comprend au moins un moteur électrique 7. L'actionneur électromécanique 6 peut également comprendre un arbre de sortie 8, qui est rotatif autour d'un axe de rotation X.

Ici, l'axe de rotation X est parallèle à la direction de coulissement D du premier ouvrant 3a par rapport au cadre dormant 4 et, dans le cas présent, du deuxième ouvrant 3b par rapport au cadre dormant 4.

Le moteur électrique 7 comprend un rotor et un stator, non représentés, ainsi que des bobines 54. Le moteur électrique 7 comprend, en outre, un arbre de sortie, non représenté.

Avantageusement, la fenêtre 2 comprend au moins un dispositif de verrouillage 21, 22 du premier ouvrant 3a par rapport au cadre dormant 4 dans au moins une position verrouillée.

Dans l'exemple des figures 1 à 4, la fenêtre 2 comprend deux dispositifs de verrouillage 21, 22 du premier ouvrant 3a par rapport au cadre dormant 4 dans deux positions verrouillées distinctes.

Avantageusement, une première position verrouillée du premier ouvrant 3a par rapport au cadre dormant 4 correspond à une position fermée verrouillée du premier ouvrant 3a par rapport au cadre dormant 4, au moyen d'un premier dispositif de verrouillage 21.

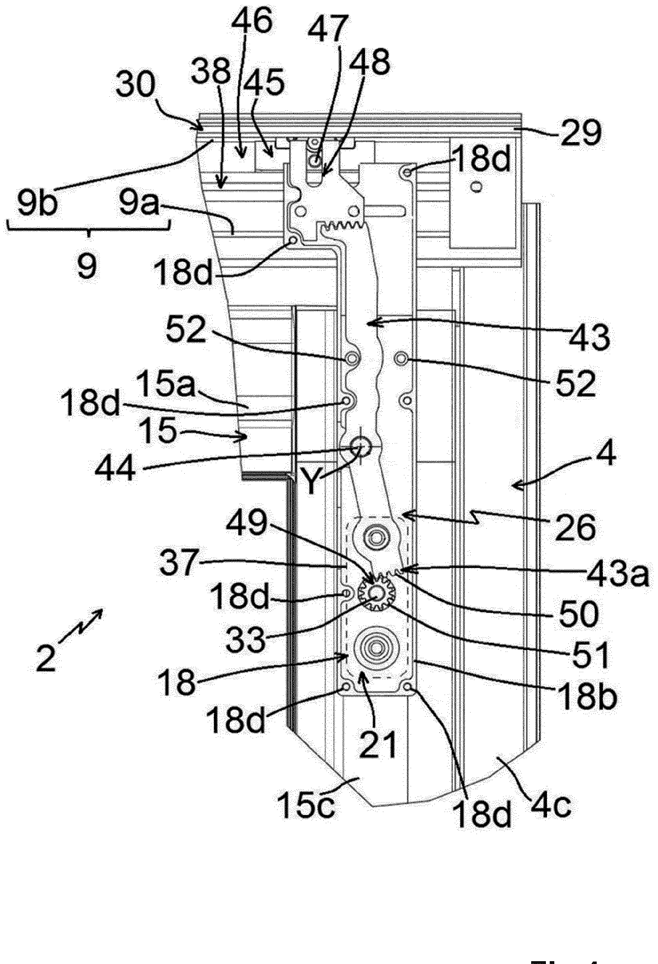

Ici, le premier dispositif de verrouillage 21 fait partie intégrante du système de ferrure 20, comme illustré aux figures 3 et 4.

Avantageusement, l'actionneur électromécanique 6 est configuré pour entraîner en déplacement le premier ouvrant 3a par rapport au cadre dormant 4 et pour actionner le premier dispositif de verrouillage 21 dans la position fermée verrouillée du premier ouvrant 3a par rapport au cadre dormant 4.

Avantageusement, une deuxième position verrouillée du premier ouvrant 3a par rapport au cadre dormant 4 correspond à une position entrebâillée verrouillée du premier ouvrant 3a par rapport au cadre dormant 4, au moyen d'un deuxième dispositif de verrouillage 22, représenté à la figure 2.

En pratique, la position entrebâillée verrouillée est positionnée entre la position fermée et une position ouverte.

Avantageusement, l'actionneur électromécanique 6 est configuré pour entraîner en déplacement le premier ouvrant 3a par rapport au cadre dormant 4 et pour actionner le deuxième dispositif de verrouillage 22 dans la position entrebâillée verrouillée du premier ouvrant 3a par rapport au cadre dormant 4.

Avantageusement, le premier ouvrant 3a peut être verrouillé par rapport au cadre dormant 4 dans la position fermée verrouillée au moyen du premier dispositif de verrouillage 21 ou dans la position entrebâillée verrouillée au moyen du deuxième dispositif de verrouillage 22 ou dans chacune des positions verrouillées, fermée ou entrebâillée, au moyen des premier et deuxième dispositifs de verrouillage 21, 22.

Avantageusement, le moteur électrique 7 de l'actionneur électromécanique 6 est de type à vitesse variable.

Ainsi, le moteur électrique 7 de l'actionneur électromécanique 6 est configuré pour fonctionner à au moins une première vitesse, selon une première consigne de vitesse V1, et à au moins une deuxième vitesse, selon une deuxième consigne de vitesse V2. La deuxième consigne de vitesse V2 est inférieure à la première consigne de vitesse V1.

De cette manière, le déplacement du premier ouvrant 3a par rapport au cadre dormant 4 est mis en oeuvre soit à la première vitesse soit à la deuxième vitesse.

Ici, le moteur électrique 7 est de type sans balais à commutation électronique, appelé également « BLDC » (acronyme du terme anglo-saxon BrushLess Direct Current) ou « synchrone à aimants permanents ».

Avantageusement, le moteur électrique 7 de l'actionneur électromécanique 6 est configuré pour adapter sa vitesse de rotation en fonction de la position du premier ouvrant 3a par rapport au cadre dormant 4.

Avantageusement, le moteur électrique 7 de l'actionneur électromécanique 6 est commandé à la deuxième consigne de vitesse V2 lors de l'approche d'au moins une position de fin de course, pouvant être, notamment, la position fermée du premier ouvrant 3a par rapport au cadre dormant 4 et la position complètement ouverte du premier ouvrant 3a par rapport au cadre dormant 4, et, éventuellement, lors de l'approche d'au moins une position prédéterminée, pouvant être, notamment, la position entrebâillée verrouillée.

Ainsi, le moteur électrique 7 de l'actionneur électromécanique 6 est configuré pour diminuer sa vitesse de rotation lors de l'approche d'au moins une position de fin de course ou d'au moins une position prédéterminée.

Avantageusement, l'actionneur électromécanique 6 est disposé sur une partie fixe par rapport à la fenêtre 2, en particulier par rapport au cadre dormant 4.

Avantageusement, l'actionneur électromécanique 6 est de type réversible. Avantageusement, l'actionneur électromécanique 6 est dépourvu d'un frein.

Ainsi, l'absence de frein dans l'actionneur électromécanique 6 permet de garantir la réversibilité de l'actionneur électromécanique 6.

L'actionneur électromécanique 6 peut également comprendre un réducteur, non représenté.

Avantageusement, le réducteur comprend au moins un étage de réduction. Ledit au moins un étage de réduction peut être un train d'engrenages de type épicycloïdal.

Le type et le nombre d'étages de réduction du réducteur ne sont pas limitatifs.

Avantageusement, le réducteur est de type réversible.

Avantageusement, le moteur électrique 7 et, éventuellement, le réducteur sont disposés à l'intérieur d'un carter 17 de l'actionneur électromécanique 6.

Ici, l'actionneur électromécanique 6 est de type tubulaire.

L'actionneur électromécanique 6 peut également comprendre un dispositif de détection de fin de course et/ou d'obstacle, non représenté. Ce dispositif de détection est électronique. En variante, ce dispositif de détection peut être mécanique.

Le dispositif d'entraînement motorisé 5 comprend, en outre, un élément flexible 9. L'élément flexible 9 est entraîné en déplacement par l'actionneur électromécanique 6.

L'élément flexible 9 est configuré pour entraîner en déplacement le premier ouvrant 3a par rapport au cadre dormant 4, lorsque l'actionneur électromécanique 6 est activé électriquement.

Ici, l'élément flexible 9 comprend un premier brin 9a et un deuxième brin 9b, comme illustré à la figure 4.

L'élément flexible 9 peut être de section circulaire.

La section de l'élément flexible n'est pas limitative et peut être différente, en particulier carrée, rectangulaire ou encore ovale.

En pratique, l'élément flexible 9 est un câble, un cordon ou, éventuellement, une courroie.

Il peut être réalisé dans une matière synthétique, telle que par exemple du nylon ou du polyéthylène de masse molaire très élevée.

Ainsi, l'utilisation d'un élément flexible 9 en matière synthétique permet de minimiser le diamètre de poulies ou les dimensions de renvois d'angle du dispositif d'entraînement motorisé 5.

La matière de l'élément flexible n'est pas limitative et peut être différente. En particulier, il peut s'agir d'un acier.

Le dispositif d'entraînement motorisé 5 comprend, en outre, un bras d'entraînement 18, tel qu'illustré aux figures 1 à 4. Le bras d'entraînement 18 est configuré pour entraîner, autrement dit entraîne, en déplacement le premier ouvrant 3a par rapport au cadre dormant 4, lorsque l'actionneur électromécanique 6 est activé électriquement.

Avantageusement, le bras d'entraînement 18 est configuré pour être relié, autrement dit est relié, d'une part, au cadre 15 du premier ouvrant 3a et, plus particulièrement, au premier montant latéral 15c du cadre 15 du premier ouvrant 3a et, d'autre part, à l'élément flexible 9.

Ainsi, le bras d'entraînement 18 est configuré pour solidariser l'élément flexible 9 au premier ouvrant 3a.

Avantageusement, l'élément flexible 9 est configuré pour être relié, autrement dit est relié, au bras d'entraînement 18, quel que soit l'état des éléments de verrouillage du système de ferrure 20, c'est-à-dire aussi bien dans l'état verrouillé que dans l'état déverrouillé du premier ouvrant 3a par rapport au cadre dormant 4.

Ainsi, l'élément flexible 9 est relié au bras d'entraînement 18 de manière permanente, dans une configuration assemblée du dispositif d'entraînement motorisé 5 sur la fenêtre 2.

De cette manière, la liaison entre l'élément flexible 9 et le bras d'entraînement 18 est simplifiée et permet de minimiser les coûts d'obtention de la fenêtre 2.

Ici, le bras d'entraînement 18 est fixé directement sur le premier ouvrant 3a, dans la configuration assemblée du dispositif d'entraînement motorisé 5 sur la fenêtre 2.

Préférentiellement, le bras d'entraînement 18 est fixe, donc immobile, par rapport au cadre 15 du premier ouvrant 3a, dans la configuration assemblée du dispositif d'entraînement motorisé 5 sur la fenêtre 2.

De cette manière, la liaison entre le bras d'entraînement 18 et le cadre 15 du premier ouvrant 3a est simplifiée et permet de minimiser les coûts d'obtention de la fenêtre 2.

Préférentiellement, le bras d'entraînement 18 et le premier dispositif de verrouillage 21 sont disposés en partie supérieure du premier montant latéral 15c du cadre 15 du premier ouvrant 3a, dans la configuration assemblée de la fenêtre 2 par rapport au bâtiment.

Ainsi, le bras d'entraînement 18 est configuré pour s'accrocher à l'élément flexible 9 disposé au-dessus du cadre dormant 4, en particulier de la traverse supérieure 4a du cadre dormant 4.

En outre, le bras d'entraînement 18 et le premier dispositif de verrouillage 21 sont disposés au plus proche de l'élément flexible 9, puisque l'élément flexible 9 s'étend le long de la traverse supérieure 4a du cadre dormant 4.

Préférentiellement, le bras d'entraînement 18 est fixé sur une face externe du premier montant latéral 15c du cadre 15 du premier ouvrant 3a, dans la configuration assemblée du dispositif d'entraînement motorisé 5 sur la fenêtre 2.

Ainsi, le bras d'entraînement 18 est fixé sur une face du premier montant latéral 15c du cadre 15 du premier ouvrant 3a qui est visible par l'utilisateur.

De cette manière, la fixation du bras d'entraînement 18 sur le premier montant latéral 15c du cadre 15 du premier ouvrant 3a est facilitée par rapport à une fixation du bras d'entraînement 18 sur une zone interne du cadre 15 du premier ouvrant 3a, en particulier située au niveau du premier rail de coulissement 11a de la traverse supérieure 4a du cadre dormant 4, dans la configuration assemblée de la fenêtre 2 par rapport au bâtiment.

Avantageusement, le bras d'entraînement 18 est assemblé avec le premier ouvrant 3a du côté intérieur du cadre 15 du premier ouvrant 3a, dans la configuration assemblée de la fenêtre 2 par rapport au bâtiment.

Le côté intérieur du cadre 15 du premier ouvrant 3a est orienté vers l'intérieur du bâtiment, dans la configuration assemblée de la fenêtre 2 par rapport au bâtiment.

En pratique, le bras d'entraînement 18 est fixé sur le premier montant latéral 15c du cadre 15 du premier ouvrant 3a au moyen d'éléments de fixation, non représentés, en particulier démontables au moyen d'un outil.

Ici, les éléments de fixation du bras d'entraînement 18 sur le premier ouvrant 3a sont des éléments de fixation par vissage.

Le type d'éléments de fixation du bras d'entraînement sur le premier ouvrant n'est pas limitatif et peut être différent. Il peut s'agir, en particulier, d'éléments de fixation par encliquetage élastique.

Avantageusement, le bras d'entraînement 18 est fixé sur le cadre 15 du premier ouvrant 3a, suite à l'installation du premier ouvrant 3a à l'intérieur du cadre dormant 4 et, dans le cas présent, également du deuxième ouvrant 3b à l'intérieur du cadre dormant 4, installation au cours de laquelle sont mis en oeuvre les réglages du système de ferrure 20 et des éléments de coulissement.

Ainsi, les réglages du système de ferrure 20 et des éléments de coulissement peuvent être mis en oeuvre manuellement et classiquement, comme pour une fenêtre dépourvue du dispositif d'entraînement motorisé 5.

Préférentiellement, le bras d'entraînement 18 est fixé sur le cadre 15 du premier ouvrant 3a, suite au raccordement électrique de l'actionneur électromécanique 6, soit à un réseau d'alimentation électrique du secteur, soit à une batterie.

Dans l'exemple de réalisation illustré à la figure 2, le dispositif d'entraînement motorisé 5 comprend une poulie d'enroulement 19 de l'élément flexible 9. La poulie d'enroulement 19 est entraînée en rotation par l'arbre de sortie 8 de l'actionneur électromécanique 6.

Avantageusement, une première extrémité du premier brin 9a de l'élément flexible 9 est reliée à une première partie de la poulie d'enroulement 19. Une première extrémité du deuxième brin 9b de l'élément flexible 9 est reliée à une deuxième partie de la poulie d'enroulement 19.

Avantageusement, la première extrémité de chacun des premier et deuxième brins 9a, 9b de l'élément flexible 9 est accrochée respectivement à la première partie ou à la deuxième partie de la poulie d'enroulement 19 au moyen d'éléments de fixation, non représentés.

Ainsi, la première extrémité de chacun des premier et deuxième brins 9a, 9b de l'élément flexible 9 est respectivement fixée directement à la première partie ou à la deuxième partie de la poulie d'enroulement 19.

En pratique, les éléments de fixation de la première extrémité de chacun des premier et deuxième brins 9a, 9b de l'élément flexible 9 sur la poulie d'enroulement 19 sont des éléments de type serre-câble.

Ici, ces éléments de fixation sont des vis, en particulier de type auto-taraudeuses, se vissant dans la poulie d'enroulement 19, de sorte à fixer les premier et deuxième brins 9a, 9b de l'élément flexible 9 par coincement entre la tête des vis et la surface d'enroulement de l'élément flexible 9 de la poulie d'enroulement 19.

Ici, le sens d'enroulement, respectivement de déroulement, du premier brin 9a de l'élément flexible 9 autour de la première partie de la poulie d'enroulement 19 est opposé au sens d'enroulement, respectivement de déroulement, du deuxième brin 9b de l'élément flexible 9 autour de la deuxième partie de la poulie d'enroulement 19.

Ainsi, lors du déplacement du premier ouvrant 3a par rapport au cadre dormant 4 selon un premier sens de coulissement, notamment lors du déplacement de la position fermée vers une position ouverte du premier ouvrant 3a par rapport au cadre dormant 4, le premier brin 9a de l'élément flexible 9 s'enroule autour de la première partie de la poulie d'enroulement 19, alors que le deuxième brin 9b de l'élément flexible 9 se déroule autour de la deuxième partie de la poulie d'enroulement 19.

En outre, lors du déplacement du premier ouvrant 3a par rapport au cadre dormant 4 selon un deuxième sens de coulissement, notamment lors du déplacement d'une position ouverte vers la position fermée du premier ouvrant 3a par rapport au cadre dormant 4, le premier brin 9a de l'élément flexible 9 se déroule autour de la première partie de la poulie d'enroulement 19, alors que le deuxième brin 9b de l'élément flexible 9 s'enroule autour de la deuxième partie de la poulie d'enroulement 19.

Le deuxième sens de coulissement du premier ouvrant 3a par rapport au cadre dormant 4 est opposé au premier sens de coulissement.

De cette manière, le sens d'entraînement en rotation du premier brin 9a de l'élément flexible 9 autour de la première partie de la poulie d'enroulement 19 est inverse au sens d'entraînement en rotation du deuxième brin 9b de l'élément flexible 9 autour de la deuxième partie de la poulie d'enroulement 19.

Avantageusement, le sens de coulissement du premier ouvrant 3a par rapport au cadre dormant 4 est déterminé en fonction du sens de rotation de l'arbre de sortie 8 de l'actionneur électromécanique 6. En outre, le sens d'entraînement en rotation de la poulie d'enroulement 19 est déterminé par le sens de rotation de l'arbre de sortie 8 de l'actionneur électromécanique 6.

Ainsi, le sens d'entraînement en rotation du premier brin 9a et du deuxième brin 9b de l'élément flexible 9 autour des première et deuxième parties de la poulie d'enroulement 19 est fonction du sens de rotation de l'arbre de sortie 8 de l'actionneur électromécanique 6.

Ici, le sens d'entraînement en rotation de la poulie d'enroulement 19 est identique au sens de rotation de l'arbre de sortie 8 de l'actionneur électromécanique 6.

Le dispositif d'entraînement motorisé 5 permet donc de faire coulisser automatiquement le premier ouvrant 3a par rapport au cadre dormant 4 selon la direction de coulissement D, en enroulant, respectivement en déroulant, le premier brin 9a de l'élément flexible 9 autour de la première partie de la poulie d'enroulement 19 et en déroulant, respectivement en enroulant, le deuxième brin 9b de l'élément flexible 9 autour de la deuxième partie de la poulie d'enroulement 19.

Le dispositif d'entraînement motorisé 5 permet ainsi de fermer et d'ouvrir de manière motorisée le premier ouvrant 3a par rapport au cadre dormant 4, par coulissement selon la direction de coulissement D.

Des moyens de commande de l'actionneur électromécanique 6 permettent le déplacement par coulissement du premier ouvrant 3a par rapport au cadre dormant 4. Ces moyens de commande comprennent au moins une unité électronique de contrôle 10. L'unité électronique de contrôle 10 est configurée pour mettre en fonctionnement le moteur électrique 7 de l'actionneur électromécanique 6 et, en particulier, permettre l'alimentation en énergie électrique du moteur électrique 7.

Ainsi, l'unité électronique de contrôle 10 commande, notamment, le moteur électrique 7, de sorte à ouvrir ou fermer par coulissement le premier ouvrant 3a par rapport au cadre dormant 4.

De cette manière, la fenêtre 2 comprend l'unité électronique de contrôle 10. Plus particulièrement, l'unité électronique de contrôle 10 est intégrée dans le dispositif d'entraînement motorisé 5 et, plus particulièrement, dans l'actionneur électromécanique 6.

Les moyens de commande de l'actionneur électromécanique 6 et, plus particulièrement, l'unité électronique de contrôle 10 comprennent des moyens matériels et/ou logiciels.

A titre d'exemple nullement limitatif, les moyens matériels peuvent comprendre au moins un microcontrôleur 36.

Avantageusement, le dispositif d'entraînement motorisé 5 et, plus particulièrement, l'actionneur électromécanique 6 comprend un dispositif de comptage 24. Le dispositif de comptage 24 est configuré pour coopérer avec l'unité électronique de contrôle 10. En outre, le dispositif de comptage 24 et l'unité électronique de contrôle 10 sont configurés pour déterminer une position, pouvant être appelée « courante », du premier ouvrant 3a par rapport au cadre dormant 4.

Avantageusement, le dispositif de comptage 24 comprend au moins un capteur 32, en particulier de position.

Ici, le dispositif de comptage 24 comprend deux capteurs.

Le nombre de capteurs du dispositif de comptage n'est pas limitatif et peut être différent, en particulier égal à un ou supérieur ou égal à trois.

Dans un exemple de réalisation, le dispositif de comptage 24 est de type magnétique, par exemple un encodeur équipé d'un ou plusieurs capteurs à effet Hall.

Ici et comme illustré à la figure 2, le dispositif de comptage 24 permet de déterminer le nombre de tours réalisés par le rotor du moteur électrique 7.

En variante, non représentée, le dispositif de comptage 24 permet de déterminer le nombre de tours réalisés par l'arbre de sortie 8 de l'actionneur électromécanique 6.

Le type de dispositif de comptage n'est pas limitatif et peut être différent. Ce dispositif de comptage peut, en particulier, être de type optique, par exemple un encodeur équipé d'un ou plusieurs capteurs optiques, ou de type temporel, par exemple une horloge du microcontrôleur 36.

Avantageusement, l'unité électronique de contrôle 10 et, plus particulièrement, le microcontrôleur 36 de l'unité électronique de contrôle 10 comprend au moins une mémoire.

Avantageusement, la mémoire de l'unité électronique de contrôle 10 est configurée pour mémoriser au moins une position de fin de course, pouvant être, notamment, la position complètement ouverte du premier ouvrant 3a par rapport au cadre dormant 4 ou la position fermée du premier ouvrant 3a par rapport au cadre dormant 4, et, éventuellement, au moins une position prédéterminée, pouvant être, notamment, la position entrebâillée verrouillée du premier ouvrant 3a par rapport au cadre dormant 4.

La fenêtre 2 et, plus particulièrement, le dispositif d'entraînement motorisé 5 comprend un coffre 30. Le coffre 30 est configuré pour loger, autrement dit loge, au moins l'actionneur électromécanique 6, en particulier dans une configuration assemblée du dispositif d'entraînement motorisé 5.

Ainsi, le coffre 30 est adapté à recevoir au moins une partie des éléments du dispositif d'entraînement motorisé 5.

Ici et tel qu'illustré à la figure 2, le coffre 30 est également configuré pour recevoir, autrement dit reçoit, la poulie d'enroulement 19, l'élément flexible 9 et l'unité électronique de contrôle 10, en particulier dans la configuration assemblée du dispositif d'entraînement motorisé 5.

Avantageusement, le dispositif d'entraînement motorisé 5 est un sous-ensemble préassemblé avant montage, dans l'exemple à l'intérieur du coffre 30, qui comprend au moins l'actionneur électromécanique 6, la poulie d'enroulement 19, l'élément flexible 9 et l'unité électronique de contrôle 10.

Avantageusement, le coffre 30 comprend au moins une paroi de montage 29.

Avantageusement, le deuxième dispositif de verrouillage 22 est également monté à l'intérieur du coffre 30 et, plus particulièrement, fixé à l'intérieur du coffre 30, en particulier sur la paroi de montage 29 du coffre 30, au moyen d'éléments de fixation, non représentés, pouvant être, par exemple, des éléments de fixation par vissage ou par rivetage.

Avantageusement, le dispositif d'entraînement motorisé 5 est commandé par une unité de commande. L'unité de commande peut être, par exemple, une unité de commande locale 12.

L'unité de commande locale 12 peut être reliée en liaison filaire ou non filaire avec une unité de commande centrale 13. L'unité de commande centrale 13 pilote l'unité de commande locale 12, ainsi que d'autres unités de commande locales similaires et réparties dans le bâtiment.

Avantageusement, l'unité électronique de contrôle 10 comprend, en outre, un premier module de communication 23, en particulier de réception d'ordres de commande, les ordres de commande étant émis par un émetteur d'ordres, tel que l'unité de commande locale 12 ou l'unité de commande centrale 13, ces ordres étant destinés à commander le dispositif d'entraînement motorisé 5.

Préférentiellement, le premier module de communication 23 de l'unité électronique de contrôle 10 est de type sans fil. Les ordres de commande peuvent être, par exemple, des ordres radioélectriques.

Avantageusement, le premier module de communication 23 peut également permettre la réception d'ordres transmis par des moyens filaires.

L'unité électronique de contrôle 10, l'unité de commande locale 12 et/ou l'unité de commande centrale 13 peuvent être en communication avec un ou plusieurs capteurs configurés pour déterminer, par exemple, une température, une hygrométrie, une vitesse de vent, une mesure d'un paramètre de qualité d'air intérieur ou extérieur ou encore une présence.

L'unité de commande locale 12 et/ou l'unité de commande centrale 13 peut également être en communication avec un serveur 14, de sorte à contrôler l'actionneur électromécanique 6 suivant des données mises à disposition à distance par l'intermédiaire d'un réseau de communication, en particulier un réseau internet pouvant être relié au serveur 14.

L'unité électronique de contrôle 10 peut être commandée à partir de l'unité de commande locale 12 ou centrale 13. L'unité de commande locale 12 ou centrale 13 est pourvue d'un clavier de commande. Le clavier de commande de l'unité de commande locale 12 ou centrale 13 comprend des éléments de sélection 39 et, éventuellement, des éléments d'affichage 40.

A titre d'exemples nullement limitatifs, les éléments de sélection peuvent être des boutons poussoirs ou des touches sensitives, les éléments d'affichage peuvent être des diodes électroluminescentes, un afficheur LCD (acronyme du terme anglo-saxon « Liquid Crystal Display ») ou TFT (acronyme du terme anglo-saxon « Thin Film Transistor »). Les éléments de sélection et d'affichage peuvent être également réalisés au moyen d'un écran tactile.

L'unité de commande locale 12 ou centrale 13 comprend au moins un deuxième module de communication 41.

Ainsi, le deuxième module de communication 41 de l'unité de commande locale 12 ou centrale 13 est configuré pour émettre, autrement dit émet, des ordres de commande, en particulier par des moyens sans fil, par exemple radioélectriques, ou par des moyens filaires.

En outre, le deuxième module de communication 41 de l'unité de commande locale 12 ou centrale 13 peut également être configuré pour recevoir, autrement dit reçoit, des ordres de commande, en particulier par l'intermédiaire des mêmes moyens.

Le deuxième module de communication 41 de l'unité de commande locale 12 ou centrale 13 est configuré pour communiquer, autrement dit communique, avec le premier module de communication 23 de l'unité électronique de contrôle 10.

Ainsi, le deuxième module de communication 41 de l'unité de commande locale 12 ou centrale 13 échange des ordres de commande avec le premier module de communication 23 de l'unité électronique de contrôle 10, soit de manière monodirectionnelle soit de manière bidirectionnelle.

L'unité de commande locale 12 peut être un point de commande fixe ou nomade. Un point de commande fixe correspond à un boîtier de commande destiné à être fixé sur une façade d'un mur du bâtiment, sur une face du cadre 15 du premier ouvrant 3a de la fenêtre 2 ou encore sur une face du cadre dormant 4 de la fenêtre 2. Un point de commande nomade peut être une télécommande, un téléphone intelligent ou une tablette.

Avantageusement, l'unité de commande locale 12 ou centrale 13 comprend, en outre, un contrôleur 42.

Le dispositif d'entraînement motorisé 5 peut être contrôlé par l'utilisateur, par exemple par la réception d'un ordre de commande correspondant à un appui sur le ou l'un des éléments de sélection 39 de l'unité de commande locale 12 ou centrale 13.

Le dispositif d'entraînement motorisé 5 peut également être contrôlé automatiquement, par exemple par la réception d'un ordre de commande correspondant à au moins un signal provenant d'au moins un capteur et/ou à un signal provenant d'une horloge de l'unité électronique de contrôle 10, en particulier du microcontrôleur 36. Le capteur et/ou l'horloge peuvent être intégrés à l'unité de commande locale 12 ou à l'unité de commande centrale 13.

L'unité de commande locale 12 permet à l'utilisateur d'intervenir directement sur l'actionneur électromécanique 6 du dispositif d'entraînement motorisé 5 par l'intermédiaire de l'unité électronique de contrôle 10 associée à ce dispositif d'entraînement motorisé 5, ou d'intervenir indirectement sur l'actionneur électromécanique 6 du dispositif d'entraînement motorisé 5 par l'intermédiaire de l'unité de commande centrale 13.

Le dispositif d'entraînement motorisé 5, en particulier l'unité électronique de contrôle 10, est, de préférence, configuré pour exécuter des ordres de commande de fermeture par coulissement, ainsi que d'ouverture par coulissement du premier ouvrant 3a par rapport au cadre dormant 4, ces ordres de commande pouvant être émis, notamment, par l'unité de commande locale 12 ou par l'unité de commande centrale 13.

L'unité électronique de contrôle 10 est ainsi apte à mettre en fonctionnement l'actionneur électromécanique 6 du dispositif d'entraînement motorisé 5 et, en particulier, permettre l'alimentation en énergie électrique de l'actionneur électromécanique 6.

Ici et tel qu'illustré à la figure 2, l'unité électronique de contrôle 10 est disposée à l'intérieur du carter 17 de l'actionneur électromécanique 6.

Avantageusement, l'unité de commande locale 12 comprend un capteur mesurant au moins un paramètre de l'environnement à l'intérieur du bâtiment et intégré à cette unité.

Ainsi, l'unité de commande locale 12 peut communiquer avec l'unité de commande centrale 13, et l'unité de commande centrale 13 peut commander l'unité électronique de contrôle 10 associée au dispositif d'entraînement motorisé 5 en fonction de données provenant du capteur mesurant le paramètre de l'environnement à l'intérieur du bâtiment.

Par ailleurs, l'unité de commande locale 12 peut commander directement l'unité électronique de contrôle 10 associée au dispositif d'entraînement motorisé 5 en fonction de données provenant du capteur mesurant le paramètre de l'environnement à l'intérieur du bâtiment.

A titre d'exemples nullement limitatifs, un paramètre de l'environnement à l'intérieur du bâtiment mesuré par le capteur intégré à l'unité de commande locale 12 est l'humidité, la température, le taux de dioxyde de carbone ou le taux d'un composé organique volatile dans l'air.

Avantageusement, le dispositif d'entraînement motorisé 5 permet de déplacer automatiquement par coulissement le premier ouvrant 3a par rapport au cadre dormant 4 jusqu'à une position prédéterminée, entre la position fermée et la position ouverte maximale. Le déplacement par coulissement du premier ouvrant 3a par rapport au cadre dormant 4 jusqu'à la position prédéterminée, en particulier d'ouverture partielle ou de fermeture, est mis en oeuvre suite à la réception d'un ordre de commande émis par l'unité de commande locale 12, l'unité de commande centrale 13 ou un capteur.

Ici, un mouvement par coulissement du premier ouvrant 3 par rapport au cadre dormant 4 selon la direction de coulissement D est mis en oeuvre en alimentant en énergie électrique l'actionneur électromécanique 6, de sorte à dérouler ou enrouler les premier et deuxième brins 9a, 9b de l'élément flexible 9 autour des première et deuxième parties de la poulie d'enroulement 19.

Ainsi, le déroulement ou l'enroulement des premier et deuxième brins 9a, 9b de l'élément flexible 9 autour des première et deuxième parties de la poulie d'enroulement 19 est contrôlé par l'alimentation en énergie électrique de l'actionneur électromécanique 6.

En pratique, l'alimentation en énergie électrique de l'actionneur électromécanique 6 est pilotée par un ordre de commande reçu par l'unité électronique de contrôle 10 provenant de l'unité de commande locale 12, de l'unité de commande centrale 13 ou d'un capteur.

Ici, le dispositif d'entraînement motorisé 5, en particulier l'actionneur électromécanique 6, est alimenté en énergie électrique à partir d'un réseau d'alimentation électrique du secteur, en particulier par le réseau alternatif commercial.

Avantageusement, l'actionneur électromécanique 6 comprend un câble d'alimentation électrique, non représenté, permettant son alimentation en énergie électrique à partir du réseau d'alimentation électrique du secteur.

En variante, le dispositif d'entraînement motorisé 5, en particulier l'actionneur électromécanique 6, est alimenté en énergie électrique au moyen d'une batterie, non représentée. Dans un tel cas, la batterie peut être rechargée, par exemple, par un panneau photovoltaïque ou tout autre système de récupération d'énergie, notamment, de type thermique.

En variante, le dispositif d'entraînement motorisé 5, en particulier l'actionneur électromécanique 6, est alimenté en énergie électrique au moyen de la batterie ou à partir du réseau d'alimentation électrique du secteur, notamment en fonction de l'état de charge de la batterie.

Ici, la poulie d'enroulement 19 et l'arbre de sortie 8 de l'actionneur électromécanique 6 présentent un même axe de rotation X. En d'autres termes, l'axe de rotation de la poulie d'enroulement 19 est confondu avec l'axe de rotation X de l'arbre de sortie 8 de l'actionneur électromécanique 6.

Ainsi, la poulie d'enroulement 19 est disposée dans le prolongement de l'arbre de sortie 8 de l'actionneur électromécanique 6 et est entraînée en rotation autour d'un même axe de rotation X que l'arbre de sortie 8 de l'actionneur électromécanique 6.

Par ailleurs, l'élément flexible 9 se présente sous la forme d'une boucle, dite ouverte, au moins entre la première extrémité du premier brin 9a reliée à la première partie de la poulie d'enroulement 19 et la première extrémité du deuxième brin 9b reliée à la deuxième partie de la poulie d'enroulement 19.

De cette manière, les premier et deuxième brins 9a, 9b de l'élément flexible 9 sont reliés à la poulie d'enroulement 19 et séparés au niveau des première et deuxième parties de celle-ci.

Préférentiellement, l'actionneur électromécanique 6 est fixé à l'intérieur du coffre 30 au moyen d'éléments de fixation 28, comme illustré à la figure 2.

En outre, la poulie d'enroulement 19 est maintenue à l'intérieur du coffre 30 au moyen de ces mêmes éléments de fixation 28.

En pratique, les éléments de fixation 28 de l'actionneur électromécanique 6 à l'intérieur du coffre 30 comprennent des supports, en particulier des équerres de fixation.

Avantageusement, ces supports 28 sont fixés sur la paroi de montage 29 du coffre 30 par vissage.

En pratique, chaque support 28 comprend au moins un trou de passage, non représenté, d'une vis de fixation. Dans un exemple de réalisation, chaque support 28 peut comprendre deux trous de passage d'une vis de fixation.

En outre, une vis de fixation traversant un trou de passage est vissée dans la paroi de montage 29 du coffre 30, en particulier dans une ouverture de vissage ménagée dans la paroi de montage 29 du coffre 30.

Ici, les éléments de fixation 28 de l'actionneur électromécanique 6 à l'intérieur du coffre 30 comprennent trois supports. Un premier support 28 est assemblé à une première extrémité 6a de l'actionneur électromécanique 6. Un deuxième support 28 est assemblé à une deuxième extrémité 6b de l'actionneur électromécanique 6 et, plus particulièrement, entre la deuxième extrémité 6b de l'actionneur électromécanique 6 et une première extrémité 19a de la poulie d'enroulement 19. La première extrémité 6a de l'actionneur électromécanique 6 est opposée à la deuxième extrémité 6b de l'actionneur électromécanique 6. Un troisième support 28 est assemblé à une deuxième extrémité 19b de la poulie d'enroulement 19. La première extrémité 19a de la poulie d'enroulement 19 est opposée à la deuxième extrémité 19b de la poulie d'enroulement 19.

Avantageusement, la paroi de montage 29 du coffre 30 comprend une rainure 38, comme illustré à la figure 4. En outre, la rainure 38 de la paroi de montage 29 du coffre 30 s'étend suivant la direction de coulissement D du premier ouvrant 3a par rapport au cadre dormant 4 et, dans le cas présent, du deuxième ouvrant 3b par rapport au cadre dormant 4.

Avantageusement, chaque support 28 comprend au moins un pion, non représenté, configuré pour coopérer, autrement dit qui coopère, avec la rainure 38 ménagée dans la paroi de montage 29 du coffre 30, dans la configuration assemblée du dispositif d'entraînement motorisé 5. Dans un exemple de réalisation, chaque support 28 comprend deux pions.

Ainsi, chaque support 28 est orienté et positionné par rapport à la paroi de montage 29 du coffre 30.

Avantageusement, la rainure 38 de la paroi de montage 29 du coffre 30 est configurée pour fixer au moins l'actionneur électromécanique 6, en particulier au moyen des éléments de fixation 28, dans la configuration assemblée du dispositif d'entraînement motorisé 5.

Ici, la rainure 38 de la paroi de montage 29 du coffre 30 est également configurée pour fixer la poulie d'enroulement 19, ainsi que le deuxième dispositif de verrouillage 22.

Ainsi, l'assemblage de différents éléments, tels que l'actionneur électromécanique 6, la poulie d'enroulement 19 et le deuxième dispositif de verrouillage 22, au moyen de la rainure 38 de la paroi de montage 29 du coffre 30 permet de minimiser les coûts d'obtention de la fenêtre 2.

Avantageusement, la fixation de l'actionneur électromécanique 6, ainsi que de la poulie d'enroulement 19, sur les supports 28 est mise en oeuvre par des éléments de fixation, en particulier par vissage.

En variante, non représentée, les éléments de fixation de l'actionneur électromécanique 6, ainsi que de la poulie d'enroulement 19, sur les supports 28 sont des éléments de fixation par encliquetage élastique.

Ici et comme illustré à la figure 2, l'élément flexible 9 du dispositif d'entraînement motorisé 5 s'étend à l'intérieur du coffre 30, à partir de la première partie de la poulie d'enroulement 19 jusqu'à la deuxième partie de la poulie d'enroulement 19.

Ainsi, un tel arrangement de l'élément flexible 9 permet de garantir les déplacements par coulissement du premier ouvrant 3a par rapport au cadre dormant 4, ainsi que l'aspect esthétique de la fenêtre 2.

En pratique, le dispositif d'entraînement motorisé 5 comprend au moins un élément de renvoi d'angle, non représenté, configuré pour coopérer, autrement dit coopérant, avec l'élément flexible 9, dans la configuration assemblée du dispositif d'entraînement motorisé 5, cet élément de renvoi d'angle pouvant être, par exemple, une poulie ou un élément de guidage. Le nombre d'éléments de renvoi d'angle n'est pas limitatif.

Avantageusement, le coffre 30 est disposé en partie supérieure de la fenêtre 2, dans la configuration assemblée de la fenêtre 2 par rapport au bâtiment.

Comme mentionné ci-dessus et tel qu'illustré à la figure 2, l'actionneur électromécanique 6 et l'élément flexible 9 sont disposés dans le coffre 30 ménagé en partie supérieure de la fenêtre 2, en particulier s'étendant au moins en partie au-dessus de la traverse supérieure 4a du cadre dormant 4.

Ainsi, l'actionneur électromécanique 6 et l'élément flexible 9 sont dissimulés dans le coffre 30, de sorte à garantir l'aspect esthétique de la fenêtre coulissante 2.

De même, la poulie d'enroulement 19 est disposée dans le coffre 30 ménagé en partie supérieure de la fenêtre 2.

En outre, le coffre 30 s'étend totalement devant le cadre dormant 4, dans la configuration assemblée de la fenêtre 2 par rapport au bâtiment.

Ainsi, le coffre 30 s'étend en saillie par rapport au cadre dormant 4.

Dans un tel cas, le coffre 30 est disposé en vis-à-vis de la traverse supérieure 4a du cadre dormant 4, c'est-à-dire en proéminence vers l'intérieur du bâtiment, dans la configuration assemblée de la fenêtre 2 par rapport au bâtiment.

En variante, non représentée, le coffre 30 s'étend partiellement devant le cadre dormant 4, dans la configuration assemblée de la fenêtre 2 par rapport au bâtiment.

Ainsi, le coffre 30 s'étend en partie en saillie par rapport au cadre dormant 4.

Dans un tel cas, le coffre 30 est au-dessus de la traverse supérieure 4a du cadre dormant 4 et en vis-à-vis de cette traverse supérieure 4a, c'est-à-dire en proéminence vers l'intérieur du bâtiment, dans la configuration assemblée de la fenêtre 2 par rapport au bâtiment.

Avantageusement, le coffre 30 comprend une partie fixe 30a et une partie amovible 30b, de sorte à permettre un accès à l'actionneur électromécanique 6 et à l'élément flexible 9, ainsi qu'à la poulie d'enroulement 19.

Ainsi, la partie amovible 30b du coffre 30, qui est retirée dans la configuration de la figure 2, permet de réaliser une opération de maintenance du dispositif d'entraînement motorisé 5 et/ou une opération de réparation de celui-ci.

Avantageusement, dans le cas où le deuxième ouvrant 3b est mobile manuellement, celui-ci peut être déplacé par l'utilisateur indépendamment du premier ouvrant 3a, notamment en cas d'absence d'alimentation en énergie électrique du dispositif d'entraînement motorisé 5 ou de panne du dispositif d'entraînement motorisé 5.

Avantageusement, en cas de panne du dispositif d'entraînement motorisé 5 ou de coupure d'alimentation électrique du dispositif d'entraînement motorisé 5, un coulissement manuel, en particulier par l'utilisateur, du premier ouvrant 3a par rapport au cadre dormant 4 selon la direction de coulissement D peut être mis en oeuvre.

Un tel déplacement manuel du premier ouvrant 3a par rapport au cadre dormant 4 est possible puisque l'actionneur électromécanique 6 est de type réversible.

Par ailleurs, un tel déplacement manuel du premier ouvrant 3a par rapport au cadre dormant 4 peut également être mis en oeuvre suite à la désolidarisation de l'élément flexible 9 par rapport au premier ouvrant 3a ou suite à la désolidarisation du bras d'entraînement 18 par rapport au premier ouvrant 3a.

Par ailleurs, l'utilisation de l'élément flexible 9 pour déplacer le premier ouvrant 3a par rapport au cadre dormant 4 permet de minimiser les coûts d'obtention du dispositif d'entraînement motorisé 5, ainsi que de minimiser l'encombrement du dispositif d'entraînement motorisé 5, en particulier par rapport à une courroie.

Avantageusement, la fenêtre 2 comprend un élément d'habillage 31, comme illustré aux figures 1 et 2. L'élément d'habillage 31 est configuré pour recouvrir, autrement dit recouvre, au moins le bras d'entraînement 18 et, éventuellement, au moins une partie du premier montant latéral 15c du cadre 15 du premier ouvrant 3a, en particulier suivant la hauteur du cadre 15, dans la configuration assemblée de la fenêtre 2 par rapport au bâtiment.

En pratique, l'élément d'habillage 31 est fixé par rapport au premier ouvrant 3a au moyen d'éléments de fixation, non représentés, suite à l'assemblage du bras d'entraînement 18 sur le cadre 15 du premier ouvrant 3a.

Avantageusement, les éléments de fixation de l'élément d'habillage 31 sont configurés pour coopérer avec le bras d'entraînement 18 et/ou avec le premier montant latéral 15c du cadre 15 du premier ouvrant 3a.

Les éléments de fixation de l'élément d'habillage 31 par rapport au premier ouvrant 3a peuvent être, notamment, des éléments de fixation par encliquetage élastique ou par vissage.

Avantageusement, le bras d'entraînement 18 comprend un capot 18a et un corps 18b, comme illustré à la figure 3. Le capot 18a est configuré pour recouvrir, autrement dit recouvre, le corps 18b du bras d'entraînement 18, dans une configuration assemblée du bras d'entraînement 18.

Avantageusement, le capot 18a est fixé sur le corps 18b du bras d'entraînement 18 au moyen d'éléments de fixation 35, dans la configuration assemblée du bras d'entraînement 18.

Ici, la fixation du capot 18a sur le corps 18b du bras d'entraînement 18 est mise en oeuvre par vissage. Le capot 18a comprend des trous de passage, non représentés, configurés pour coopérer avec des vis de fixation 35. En outre, le corps 18b du bras d'entraînement 18 comprend des trous de fixation 18d configurés pour coopérer avec les vis de fixation 35, comme illustré à la figure 4.

Avantageusement, la fenêtre 2 et, plus particulièrement, le dispositif d'entraînement motorisé 5 comprend, en outre, un dispositif de commande de verrouillage 26 du premier dispositif de verrouillage 21, comme illustré à la figure 3. En outre, le dispositif de commande de verrouillage 26 est configuré, d'une part, pour coopérer avec le premier dispositif de verrouillage 21 et, d'autre part, pour être actionné au moyen de l'élément flexible 9, lorsque l'actionneur électromécanique 6 est activé électriquement.

Avantageusement, le bras d'entraînement 18 supporte le dispositif de commande de verrouillage 26.

Ainsi, le bras d'entraînement 18 et le dispositif de commande de verrouillage 26 forment un sous-ensemble mécanique solidaire.

Avantageusement, le dispositif de commande de verrouillage 26 est disposé en partie à l'intérieur du bras d'entraînement 18 et, en particulier, à l'extérieur du cadre 15 du premier ouvrant 3a.

Ainsi, le dispositif de commande de verrouillage 26 est dissimulé derrière le bras d'entraînement 18, de sorte à améliorer l'aspect esthétique de la fenêtre 2.

De cette manière, le bras d'entraînement 18 recouvre le dispositif de commande de verrouillage 26, tel un capot, de sorte à masquer les différents éléments composant ce dernier et à améliorer l'esthétique de la fenêtre 2.

Préférentiellement, le bras d'entraînement 18 est relié à l'élément flexible 9 par l'intermédiaire du dispositif de commande de verrouillage 26.

Avantageusement, le coffre 30 comprend une fente, non représentée et configurée pour permettre le passage d'une partie supérieure du bras d'entraînement 18 et, éventuellement, du dispositif de commande de verrouillage 26, lors d'un déplacement du premier ouvrant 3a par rapport au cadre dormant 4 selon la direction de coulissement D.

Ainsi, le bras d'entraînement 18 et le dispositif de commande de verrouillage 26 peuvent être entraînés en déplacement le long du coffre 30, en particulier au moins en partie en vis-à-vis d'une face extérieure du coffre 30 orientée vers l'intérieur du bâtiment, dans la configuration assemblée de la fenêtre 2 par rapport au bâtiment, tout en étant reliés à l'élément flexible 9.

De cette manière, la partie supérieure du bras d'entraînement 18 et, éventuellement, la partie supérieure du dispositif de commande de verrouillage 26 sont configurées pour se déplacer à l'intérieur de la fente ménagée dans le coffre 30.

Ici, la fente du coffre 30 est ménagée dans une face inférieure du coffre 30, dans la configuration assemblée de la fenêtre 2 par rapport au bâtiment.

Par ailleurs, une partie basse du bras d'entraînement 18 et une partie basse du dispositif de commande de verrouillage 26 sont disposées à l'extérieur du coffre 30.

Avantageusement, l'arrangement formé par le dispositif d'entraînement motorisé 5, le système de ferrure 20 et le dispositif de commande de verrouillage 26 de la fenêtre 2 permet de s'affranchir d'une poignée de manoeuvre du premier ouvrant 3a, généralement disposée à la moitié de la hauteur de la fenêtre 2.

Ainsi, le premier ouvrant 3a peut être déplacé seulement au moyen du dispositif d'entraînement motorisé 5 suite à la réception d'un ordre de commande par l'unité électronique de contrôle 10 provenant de l'une des unités de commande 12, 13.

On décrit à présent plus en détail le système de ferrure 20.

Avantageusement, le système de ferrure 20 comprend, en outre, une crémone, non représentée, et au moins un élément de verrouillage, non représenté, du premier ouvrant 3a par rapport au cadre dormant 4.

Ici, le système de ferrure 20 est monté le long du premier montant latéral 15c du cadre 15 du premier ouvrant 3a.

Ici, la crémone est disposée à l'intérieur du premier montant latéral 15c du cadre 15 du premier ouvrant 3a.

En variante, non représentée, la crémone peut également être disposée en partie à l'intérieur de la traverse supérieure 15a ou de la traverse inférieure 15b du cadre 15 du premier ouvrant 3a.

Avantageusement, la crémone comporte au moins une tringle. En outre, la crémone comprend également un corps.

En pratique, le corps de la crémone est fixe par rapport au premier montant latéral 15c du cadre 15 du premier ouvrant 3a. En outre, la tringle est configurée pour se déplacer par rapport au corps de la crémone.

Avantageusement, la tringle est réalisée en plusieurs parties reliées entre elles, en particulier au moyen d'éléments de maintien, non représentés.

Ici, le déplacement de la tringle de la crémone est mis en oeuvre le long du premier montant latéral 15c du cadre 15 du premier ouvrant 3a, en particulier selon une direction verticale, dans la configuration assemblée de la fenêtre 2 par rapport au bâtiment.

Avantageusement, la tringle de la crémone comprend au moins un crochet, non représenté, formant un élément de verrouillage du premier ouvrant 3a par rapport au cadre dormant 4, tel que mentionné ci-dessus, et, de préférence, une pluralité de crochets. Le cadre dormant 4, en particulier le premier montant latéral 4c du cadre dormant 4, comprend au moins une gâche, non représentée et, de préférence, une pluralité de gâches.

Chaque crochet de la tringle est configuré pour coopérer avec une gâche du cadre dormant 4.

Les crochets de la tringle, ainsi que les gâches ménagées dans le cadre dormant 4, forment au moins en partie les éléments de verrouillage du système de ferrure 20.

Lorsque les crochets de la tringle sont engagés dans les gâches du cadre dormant 4, le premier ouvrant 3a est dans une position fermée et verrouillée par rapport au cadre dormant 4.

Lorsque les crochets de la tringle sont désengagés par rapport aux gâches du cadre dormant 4, le premier ouvrant 3a est dans une position déverrouillée par rapport au cadre dormant 4, pouvant être, en outre, fermée ou ouverte.

Le premier dispositif de verrouillage 21 est disposé à l'intérieur du cadre 15 du premier ouvrant 3a et, plus particulièrement, à l'intérieur du premier montant latéral 15c du cadre 15 du premier ouvrant 3a.

Avantageusement, le premier dispositif de verrouillage 21 comprend au moins un boîtier 37, comme illustré à la figure 4, un arbre 33, communément appelé « carré » et illustré à la figure 4, une cloche d'entraînement, non représentée, et au moins un pêne 25, comme illustré à la figure 3.

Ici, l'arbre 33 présente une section circulaire au niveau de l'une de ses extrémités. Cette extrémité de l'arbre 33 est configurée pour recevoir, autrement dit reçoit, une roue dentée 51. En outre, un corps de l'arbre 33 et l'autre de ses extrémités peut être de section carrée.

Ici et comme visible à la figure 4, le premier dispositif de verrouillage 21 comprend deux pênes 25.

Avantageusement, la cloche d'entraînement comprend un logement. Une première extrémité de l'arbre 33 est disposée à l'intérieur du logement de la cloche d'entraînement.

Avantageusement, chaque pêne 25 du premier dispositif de verrouillage 21 est configuré pour coopérer avec un trou ménagé dans la tringle de la crémone.

Ici, lors de l'entraînement en rotation de l'arbre 33 du premier dispositif de verrouillage 21 par le dispositif de commande de verrouillage 26, que ce soit pour le verrouillage du premier ouvrant 3a par rapport au cadre dormant 4 ou pour le déverrouillage du premier ouvrant 3a par rapport au cadre dormant 4, la cloche d'entraînement est entraînée en rotation à l'intérieur du boîtier 37 du premier dispositif de verrouillage 21, puis chaque pêne 25 du premier dispositif de verrouillage 21 est entraîné en translation, de sorte à déplacer la tringle le long du premier montant latéral 15c du cadre 15 du premier ouvrant 3a, en particulier suivant une direction verticale, dans la configuration assemblée de la fenêtre 2 par rapport au bâtiment.

Préférentiellement, le premier dispositif de verrouillage 21 présente des trous de vissage, non représentés, et un logement, non représenté, configuré pour recevoir la cloche d'entraînement ainsi que l'arbre 33, analogues à ceux d'un verrou d'une poignée manuelle standard, en particulier au niveau de leur emplacement et de leur dimensionnement.

Ainsi, une poignée manuelle standard peut être disposée en remplacement du bras d'entraînement 18, de sorte à fermer et verrouiller manuellement le premier ouvrant 3a par rapport au cadre dormant 4.

De cette manière, en cas de panne du dispositif d'entraînement motorisé 5 ou de coupure de l'alimentation électrique du dispositif d'entraînement motorisé 5, le bras d'entraînement 18 peut être remplacé par une poignée manuelle standard, de sorte à déplacer manuellement le premier ouvrant 3a par rapport au cadre dormant 4 et à verrouiller manuellement le premier ouvrant 3a par rapport au cadre dormant 4 par l'actionnement du premier dispositif de verrouillage 21.

On décrit à présent, en référence aux figures 3 et 4, plus en détail le dispositif de commande de verrouillage 26.

Avantageusement, le dispositif de commande de verrouillage 26 comprend un élément d'entraînement 43. L'élément d'entraînement 43 est configuré pour être relié, autrement dit est relié, à l'élément flexible 9, dans la configuration assemblée du dispositif d'entraînement motorisé 5 sur la fenêtre 2. En outre, l'élément d'entraînement 43 est monté mobile en rotation par rapport au bras d'entraînement 18, autour d'un axe de rotation Y.

Avantageusement, l'élément d'entraînement 43 est monté mobile en rotation par rapport au bras d'entraînement 18 au moyen d'un arbre 44, centré sur l'axe de rotation Y.

Ici, l'arbre 44 est configuré pour coopérer, autrement dit coopère, avec une ouverture, non représentée, ménagée dans l'élément d'entraînement 43, dans la configuration assemblée du bras d'entraînement 18.

Préférentiellement, l'élément d'entraînement 43 est disposé au moins en partie à l'intérieur du bras d'entraînement 18, dans une configuration assemblée du dispositif de commande de verrouillage 26.

Ainsi, l'élément d'entraînement 43 est masqué au moins en partie par le bras d'entraînement 18.

En outre, l'élément d'entraînement 43 est disposé, d'une part, en partie en dessous de la traverse supérieure 15a du cadre 15 du premier ouvrant 3a et, plus particulièrement, en dessous de la traverse supérieure 4a du cadre dormant 4, dans la configuration assemblée de la fenêtre 2 par rapport au bâtiment, et, d'autre part, en partie au-dessus de la traverse supérieure 15a du cadre 15 du premier ouvrant 3a, dans la configuration assemblée de la fenêtre 2 par rapport au bâtiment.

Le dispositif d'entraînement motorisé 5 comprend, en outre, une navette 45. La navette 45 est configurée pour être fixée, autrement dit est fixée sur l'élément flexible 9, en particulier sur le deuxième brin 9b de l'élément flexible 9, notamment dans la configuration assemblée du dispositif d'entraînement motorisé 5. En outre, le bras d'entraînement 18 et, plus particulièrement, l'élément d'entraînement 43 est configuré pour être relié, autrement dit est relié, à l'élément flexible 9 au moyen de la navette 45, notamment dans la configuration assemblée du dispositif d'entraînement motorisé 5.

Avantageusement, la paroi de montage 29 du coffre 30 comprend une glissière 46.

Préférentiellement, la navette 45 est configurée pour coulisser, autrement dit coulisse, à l'intérieur de la glissière 46 de la paroi de montage 29 du coffre 30, en particulier dans la configuration assemblée du dispositif d'entraînement motorisé 5.

Ainsi, les déplacements de la navette 45, lors de l'entraînement de l'élément flexible 9, sont guidés à l'intérieur de la glissière 46 de la paroi de montage 29 du coffre 30.

Avantageusement, la navette 45 comprend, en outre, un pion 47 configuré pour coopérer, autrement dit qui coopère, avec une fente 48 de l'élément d'entraînement 43, en particulier dans la configuration assemblée du dispositif d'entraînement motorisé 5.

Dans l'exemple de réalisation illustré aux figures 3 et 4, la fente 48 de l'élément d'entraînement 43 est en forme de U.

En variante, non représentée, la fente 48 de l'élément d'entraînement 43 présente une forme de trou oblong.

Ici, le pion 47 de la navette 45 est engagé dans la fente 48 de l'élément d'entraînement 43, aussi bien lors d'un déplacement du premier ouvrant 3a par rapport au cadre dormant 4, quel que soit le sens de déplacement du premier ouvrant 3a par rapport au cadre dormant 4, c'est-à-dire vers la position fermée ou vers une position ouverte, qu'à l'arrêt du premier ouvrant 3a par rapport au cadre dormant 4.

Lors d'un déplacement du premier ouvrant 3a par rapport au cadre dormant 4, quel que soit le sens de déplacement du premier ouvrant 3a par rapport au cadre dormant 4, le pion 47 de la navette 45 est en appui contre un bord de la fente 48 de l'élément d'entraînement 43.

Lors d'un déplacement du premier ouvrant 3a par rapport au cadre dormant 4, mis en oeuvre par l'actionneur électromécanique 6, vers la position fermée du premier ouvrant 3a par rapport au cadre dormant 4, la coopération du pion 47 de la navette 45 avec la fente 48 de l'élément d'entraînement 43 permet le verrouillage du premier ouvrant 3a par rapport au cadre dormant 4.

La longueur de la fente 48 ménagée dans l'élément d'entraînement 43 permet de compenser des tolérances d'assemblage du dispositif de commande de verrouillage 26, de sorte à garantir la coopération du pion 47 de la navette 45 avec la fente 48 de l'élément d'entraînement 43.

Avantageusement, le dispositif de commande de verrouillage 26 comprend, en outre, un élément de transmission 49. En outre, l'élément de transmission 49 est configuré pour coopérer, autrement dit coopère, avec l'élément d'entraînement 43, dans la configuration assemblée du dispositif de commande de verrouillage 26.

Ici et tel qu'illustré à la figure 4, l'élément d'entraînement 43 est un bras de transmission. L'élément d'entraînement 43 comprend, au niveau de l'une de ses extrémités 43a, une crémaillère 50. L'élément de transmission 49 comprend la roue dentée 51, autrement dit un pignon. En outre, la crémaillère 50 de l'élément d'entraînement 43 est configurée pour s'engrener, autrement dit s'engrène, avec la roue dentée 51 de l'élément de transmission 49, dans la configuration assemblée du dispositif de commande de verrouillage 26.

Avantageusement, la roue dentée 51 de l'élément de transmission 49 est configurée pour être assemblée, autrement dit est assemblée, sur l'arbre 33 du premier dispositif de verrouillage 21, dans la configuration assemblée du dispositif d'entraînement motorisé 5 sur la fenêtre 2.

Ainsi, la crémaillère 50 de l'élément d'entraînement 43 est configurée pour entraîner en rotation la roue dentée 51 de l'élément de transmission 49 et, par conséquent, l'arbre 33 du premier dispositif de verrouillage 21, lors de l'activation électrique de l'actionneur électromécanique 6.

De cette manière, lors d'un déplacement de la navette 45, mis en oeuvre par l'activation électrique de l'actionneur électromécanique 6 et donc de l'élément flexible 9, l'élément d'entraînement 43 est entraîné en rotation autour de l'axe de rotation Y. Puis, la roue dentée 51 de l'élément de transmission 49 est entraînée en rotation par l'intermédiaire de la crémaillère 50 de l'élément d'entraînement 43.

Ici, la roue dentée 51 de l'élément de transmission 49 et l'arbre 33 du premier dispositif de verrouillage 21 sont configurés pour être entraînés, autrement dit sont entraînés, en rotation au moyen de l'élément d'entraînement 43 par rapport au bras d'entraînement 18, dans la configuration assemblée du dispositif d'entraînement motorisé 5 sur la fenêtre 2.

Le dispositif de commande de verrouillage 26 permet ainsi de commander le verrouillage et le déverrouillage du premier ouvrant 3a par rapport au cadre dormant 4.

Préférentiellement, le dispositif de commande de verrouillage 26 comprend deux butées 52 configurées pour coopérer, autrement dit coopérant, avec l'élément d'entraînement 43, dans la configuration assemblée du dispositif de commande de verrouillage 26.

Ainsi, la course de déplacement de l'élément d'entraînement 43, lors de l'activation électrique de l'actionneur électromécanique 6 pour l'entraînement de l'élément flexible 9, est limitée par les butées 52 et, en particulier, par une première butée 52 selon le premier sens de coulissement du premier ouvrant 3a par rapport au cadre dormant 4 et par une deuxième butée 52 selon le deuxième sens de coulissement du premier ouvrant 3a par rapport au cadre dormant 4.

Ici, les butées 52 sont disposées de part et d'autre de l'élément d'entraînement 43.

Avantageusement, le pion 47 de la navette 45 est configuré pour être engagé, autrement dit est engagé, dans la fente 48 de l'élément d'entraînement 43, dans la configuration assemblée du dispositif d'entraînement motorisé 5 sur la fenêtre 2.

Préférentiellement, l'assemblage du bras d'entraînement 18 par rapport au premier ouvrant 3a est mis en oeuvre après l'installation du premier ouvrant 3a par rapport au cadre dormant 4 ou encore après une opération de maintenance nécessitant le démontage du bras d'entraînement 18 par rapport au premier ouvrant 3a.

Avantageusement, la roue dentée 51 de l'élément de transmission 49 comprend une empreinte, non représentée, telle que, par exemple, une fente. En outre, l'empreinte de la roue dentée 51 est accessible à partir de l'extérieur du bras d'entraînement 18 et, en particulier, suite au démontage du capot 18a du bras d'entraînement 18 et, éventuellement, de l'élément d'habillage 31.

Ainsi, l'empreinte de la roue dentée 51 permet à l'utilisateur de commander le dispositif de commande de verrouillage 26 manuellement, en particulier lors d'une panne d'alimentation électrique du dispositif d'entrainement motorisé 5.

Ici, la roue dentée 51 peut être entraînée en rotation au moyen d'un outil, tel que, par exemple, un tournevis, configuré pour coopérer, autrement dit coopérant, avec l'empreinte.

En variante, non représentée, l'empreinte ménagée dans la roue dentée 51 peut être configurée pour recevoir, autrement dit reçoit, un élément de visualisation d'un état du premier dispositif de verrouillage 21, en particulier un état verrouillé ou un état déverrouillé, dans la configuration assemblée du dispositif de commande verrouillage 26.

Par ailleurs, l'élément de visualisation d'un état du premier dispositif de verrouillage 21 peut être retiré de l'empreinte de la roue dentée 51, de sorte à accéder à l'empreinte de la roue dentée 51 pour permettre de commander le dispositif de commande de verrouillage 26 manuellement.

Avantageusement, le système de ferrure 20 peut également comprendre un système anti-fausse manoeuvre 27, tel qu'illustré à la figure 3.

Suite à l'activation du système anti-fausse manoeuvre 27 et lorsque l'actionneur électromécanique 6 est activé électriquement, le dispositif de commande de verrouillage 26 actionne le premier dispositif de verrouillage 21.

Ainsi, un tel arrangement de la fenêtre 2 permet de réaliser le verrouillage et le déverrouillage du premier ouvrant 3a par rapport au cadre dormant 4 par l'intermédiaire du système de ferrure 20, lors de l'atteinte de la position de fermeture du premier ouvrant 3a par rapport au cadre dormant 4, tout en maintenant les techniques traditionnelles de pose de fenêtres, en particulier de réglage des systèmes de ferrure.

En outre, cet arrangement de la fenêtre 2 permet d'utiliser un système de ferrure comprenant des éléments standards, en particulier le premier dispositif de verrouillage 21 présentant des caractéristiques standards.

Par ailleurs, le premier dispositif de verrouillage 21 est associé au bras d'entraînement 18 par l'intermédiaire du dispositif de commande de verrouillage 26, de sorte à solidariser le premier ouvrant 3a au dispositif d'entraînement motorisé 5 pourvu de l'élément flexible 9.

Ici, le mouvement transmis par le dispositif d'entraînement motorisé 5 suivant la direction de coulissement D est transformé en un mouvement de rotation au niveau du premier dispositif de verrouillage 21 par l'intermédiaire du dispositif de commande de verrouillage 26.

Avantageusement, le système anti-fausse manoeuvre 27 comprend un pion rétractable 34. Le pion rétractable 34 est configuré pour être déplacé, autrement dit est déplacé, entre une position de repos, dans laquelle la crémone est bloquée, et une position activée, dans laquelle la crémone est libérée. En outre, le système anti-fausse manoeuvre 27 est activé lors de l'enfoncement du pion rétractable 34 à l'intérieur d'un logement, non représenté, ménagé dans le cadre 15 du premier ouvrant 3a.

En pratique, l'enfoncement du pion rétractable 34 dans le logement précité est mis en oeuvre par la mise en appui du pion rétractable 34 contre le cadre dormant 4, en particulier le premier montant latéral 4c du cadre dormant 4, c'est-à-dire lorsque le premier ouvrant 3a est en position de fermeture par rapport au cadre dormant 4.

Ici, la mise en appui du pion rétractable 34 contre le cadre dormant 4 est mise en oeuvre, lorsque le premier ouvrant 3a est à proximité du cadre dormant 4, dans la position de fermeture du premier ouvrant 3a par rapport au cadre dormant 4.

Avantageusement, la tringle de la crémone est configurée pour se déplacer, autrement dit est déplacée, par rapport au corps de la crémone, lorsque la crémone est libérée au moyen du système anti-fausse manoeuvre 27, entre une première position, dite de déverrouillage du premier ouvrant 3a par rapport au cadre dormant 4, et une deuxième position, dite de verrouillage du premier ouvrant 3a par rapport au cadre dormant 4, et inversement.

Ainsi, le système anti-fausse manoeuvre 27 est configuré pour empêcher, autrement dit empêche, un déplacement de la tringle de la crémone par rapport au corps de la crémone, entre sa position de déverrouillage et sa position de verrouillage, tant que le pion rétractable 34 est maintenu dans sa position de repos.

Avantageusement, le pion rétractable 34 s'étend dans une direction perpendiculaire à la crémone.

En variante, non représentée, le système de ferrure 20 peut être dépourvu du système anti-fausse manoeuvre 27.

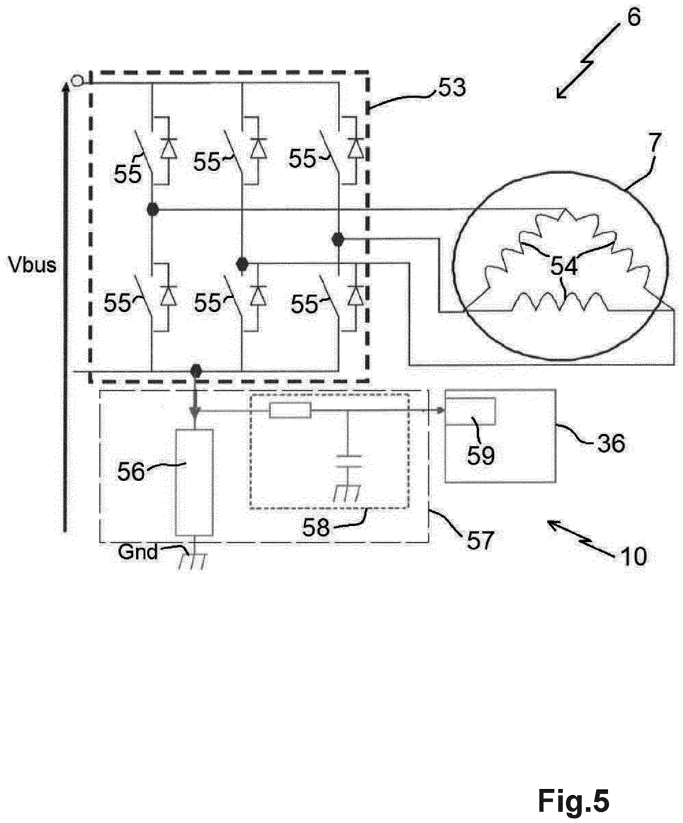

On décrit à présent plus en détail l'unité électronique de contrôle 10, en référence à la figure 5.

Avantageusement, l'unité électronique de contrôle 10 de l'actionneur électromécanique 6 comprend un circuit, non représenté, de redressement de la tension alternative du réseau d'alimentation électrique et un module d'alimentation électrique 53.

Le module d'alimentation électrique 53 est ainsi connecté électriquement à une source de tension continue Vbus. La valeur de la tension continue Vbus est définie par rapport à une tension de référence Gnd, comme illustrée à la figure 5. La tension continue Vbus est une tension aux bornes d'un onduleur, non représenté, du module d'alimentation électrique 53.

Le module d'alimentation électrique 53 alimente en énergie électrique, de manière séquentielle, les bobines 54, de sorte à produire le champ électromagnétique tournant provoquant l'entraînement en rotation du rotor du moteur électrique 7.

Le module d'alimentation électrique 53 comprend des commutateurs 55 permettant de réaliser l'alimentation électrique séquentielle des bobines 54.

Ici, les commutateurs 55 du module d'alimentation électrique 53 sont des transistors de type « MOSFET » (acronyme du terme anglo-saxon Metal Oxide Semiconductor Field Effect Transistor), et au nombre de six. Le type de commutateurs du module d'alimentation électrique et leur nombre ne sont pas limitatifs. En particulier, les commutateurs 55 du module d'alimentation électrique 53 peuvent être des transistors de type « IGBT » (acronyme du terme anglo-saxon Insulated Gate Bipolar Transistor).

L'unité électronique de contrôle 10 de l'actionneur électromécanique 6 comprend un dispositif de mesure 56 d'une valeur d'intensité I d'un courant électrique traversant le moteur électrique 7.

Au sens de la présente invention, l'intensité traversant le moteur électrique 7 est l'intensité d'un courant électrique traversant ce moteur électrique 7 en fonctionnement. L'intensité traversant le moteur électrique 7 est obtenue au moyen d'un signal redressé positif prenant en considération le courant de chacune des bobines 54 du moteur électrique 7.

L'acquisition de la valeur d'intensité I traversant le moteur électrique 7 par l'intermédiaire du dispositif de mesure 56 permet d'obtenir un signal représentatif du couple généré par le moteur électrique 7 de l'actionneur électromécanique 6.

Ici, le dispositif de mesure 56 de la valeur d'intensité I est mis en oeuvre au moyen d'une résistance, dite de « shunt », connectée électriquement au module d'alimentation électrique 53 et à la tension de référence Gnd.

Le dispositif de mesure 56 fait partie intégrante d'un générateur de signaux 57. Ce générateur de signaux 57 comprend, en outre, un filtre analogique 58, en particulier d'un circuit RC passe-bas, ce circuit RC étant constitué d'une résistance et d'une capacité.

Le générateur de signaux 57 permet de délivrer un signal représentatif de l'alimentation électrique fournie au moteur électrique 7, en particulier de l'intensité I traversant le moteur électrique 7, à une entrée du microcontrôleur 36. L'entrée du microcontrôleur 36 comprend un convertisseur analogique/numérique 59.

Le signal de la valeur d'intensité I acquis par le dispositif de mesure 56 est également traité numériquement par au moins un filtre numérique, pouvant être par exemple un filtre passe-bas, mis en oeuvre par le microcontrôleur 36.

L'unité électronique de contrôle 10 et, plus particulièrement, le microcontrôleur 36 comprend une mémoire, non représentée. Ici, la mémoire est réalisée par une mémoire du microcontrôleur 36, en particulier une mémoire de type « EEPROM » (acronyme du terme anglo-saxon Electrically Erasable Programmable Read Only Memory).

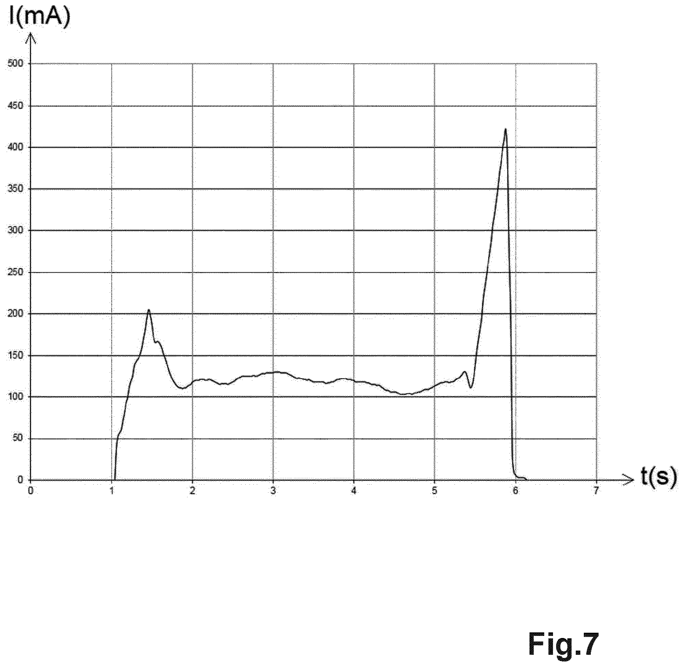

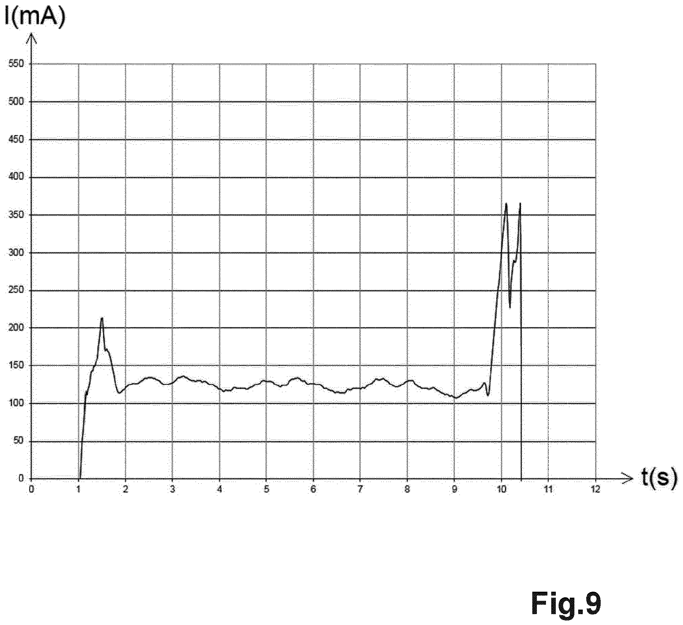

Aux figures 7 et 9, chaque graphique illustre, par une courbe en trait plein, l'évolution des valeurs d'intensité I du courant électrique traversant le moteur électrique 7, en fonction du temps t. D'une part, la figure 7 illustre le cas lorsque le procédé selon l'invention n'est pas mis en oeuvre et, d'autre part, la figure 9 illustre le cas lorsque le procédé selon l'invention est mis en oeuvre.

Le temps t est représenté sur l'axe des abscisses et l'intensité I du courant électrique est représentée sur l'axe des ordonnées.

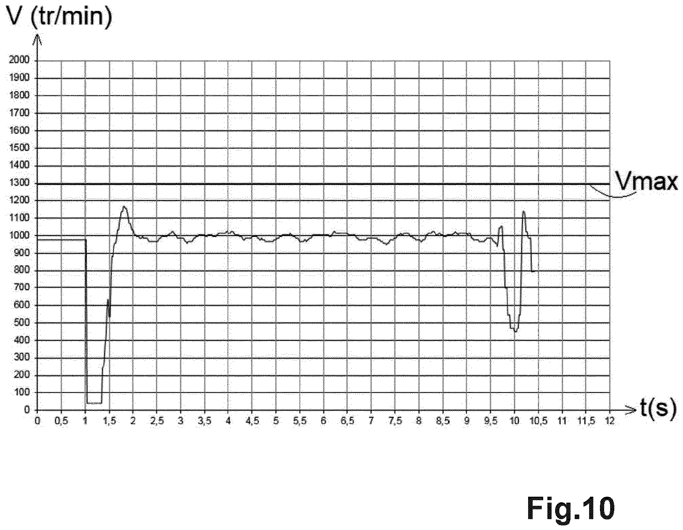

Aux figures 8 et 10, chaque graphique illustre, par une courbe en trait plein, l'évolution des valeurs de vitesse de rotation V de l'arbre de sortie du moteur électrique 7, en fonction du temps t. D'une part, la figure 8 illustre le cas lorsque le procédé selon l'invention n'est pas mis en oeuvre et, d'autre part, la figure 10 illustre le cas lorsque le procédé selon l'invention est mis en oeuvre.

Le temps t est représenté sur l'axe des abscisses et la vitesse de rotation V du moteur électrique 7 est représentée sur l'axe des ordonnées.

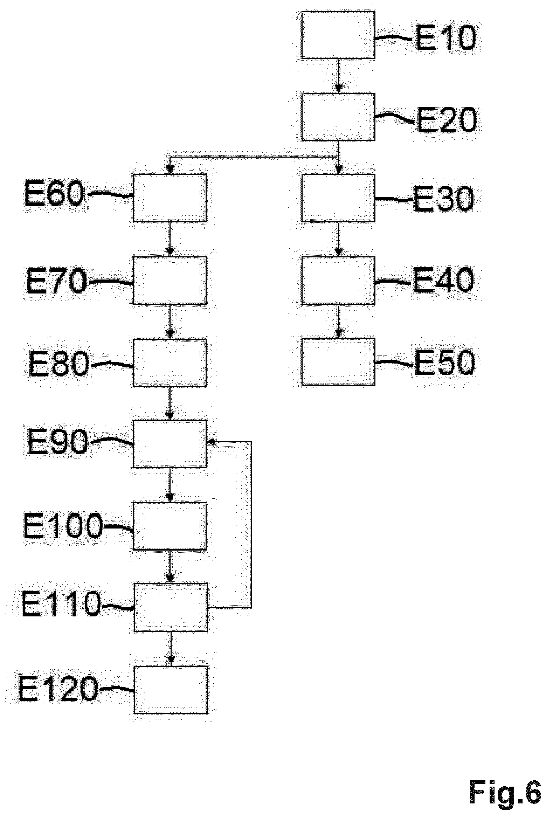

On décrit à présent, en référence à la figure 6, un mode d'exécution d'un procédé de commande en fonctionnement du dispositif d'entraînement motorisé 5 du dispositif d'entraînement motorisé 5 de la fenêtre coulissante 2 illustrée aux figures 1 à 4.

Le procédé comprend une étape de commande E20 du moteur électrique 7 au moyen de la tension d'alimentation Vbus, de sorte à déplacer le premier ouvrant 3a par rapport au cadre dormant 4.

Ici, l'étape de commande E20 du moteur électrique 7 est mise en oeuvre par l'intermédiaire de l'unité électronique de contrôle 10.

Avantageusement, le procédé comprend une étape de démarrage E10 du moteur électrique 7. Cette étape de démarrage E10 est mise en oeuvre préalablement à l'étape de commande E20.

Ici, l'étape de démarrage E10 du moteur électrique 7 est mise en oeuvre par l'intermédiaire de l'unité électronique de contrôle 10.

Avantageusement, l'étape de démarrage E10 du moteur électrique 7 est déclenchée par une émission d'un ordre de commande de déplacement du premier ouvrant 3a par rapport au cadre dormant 4, en particulier par l'unité de commande locale 12 ou centrale 13.

Avantageusement, une commande de démarrage du moteur électrique 7 correspond à une commutation des commutateurs 55 de pilotage du moteur électrique 7.

Avantageusement, l'étape de démarrage E10 du moteur électrique 7 est mise en oeuvre pendant une période de temps prédéterminée Td.

Ainsi, l'étape de commande E20 du moteur électrique 7 est mise en oeuvre suite à l'écoulement de la période de temps prédéterminée Td.

A titre d'exemple nullement limitatif, la période de temps prédéterminée Td, démarrant à partir de l'instant de commande de démarrage du moteur électrique 7, est de l'ordre de trois cents millisecondes.

Avantageusement, au cours de l'étape de démarrage E10, la commande du moteur électrique 7 est mise en oeuvre en limitant la tension d'alimentation Vbus.

Ainsi, la limitation de la tension d'alimentation Vbus, lors de l'étape de démarrage E10, permet d'éviter une démagnétisation des aimants du rotor du moteur électrique 7, notamment en raison d'un risque de blocage mécanique du rotor au cours de cette phase de fonctionnement du moteur électrique 7.

Ici, l'actionneur électromécanique 6 est alimenté en énergie électrique par un réseau d'alimentation électrique du secteur, en particulier par le réseau alternatif commercial.

La tension du réseau d'alimentation électrique ou tension secteur présente, par exemple, une valeur de 230 VRMS (valeur de crête de 325V) pour le réseau électrique français et une fréquence de 50 Hz.

En variante, la tension secteur peut présenter des valeurs différentes, en fonction du réseau électrique du pays dans lequel on se situe.

Ici, la tension d'alimentation Vbus correspond à la valeur de crête, soit à 325V.

Avantageusement, la tension d'alimentation Vbus limitée, lors de l'étape de démarrage E10 du moteur électrique 7, est supérieure ou égale à une valeur seuil de tension prédéterminée Umin, de sorte à maintenir une valeur d'intensité I minimale du courant électrique circulant dans les bobines 54 du moteur électrique 7.

A titre d'exemple nullement limitatif, la tension d'alimentation Vbus limitée minimale, lors de l'étape de démarrage E10 du moteur électrique 7, est de l'ordre de 16V, soit 5% de la tension d'alimentation Vbus, qui est de 325V.

Au cours du déplacement du premier ouvrant 3a par rapport au cadre dormant 4, le procédé comprend une étape de mesure E30 de valeurs d'intensité I du courant électrique traversant le moteur électrique 7, cette étape étant réalisée par le dispositif de mesure 56, tel qu'illustré à la figure 5. Même si cette étape de mesure E30 est représentée à la suite de l'étape E20 à la figure 6, l'étape de mesure E30 a lieu pendant l'étape de commande E20.

Avantageusement, suite à l'étape de commande E20 du moteur électrique 7, une mesure d'une valeur d'intensité I du courant électrique est mise en oeuvre périodiquement, lors de l'étape de mesure E30.

A titre d'exemple nullement limitatif, une mesure d'une valeur d'intensité I du courant électrique est mise en oeuvre toutes les cinq millisecondes.

Avantageusement, l'étape de mesure E30 des valeurs d'intensité I du courant électrique est mise en oeuvre suite à l'écoulement de la période de temps prédéterminée Td démarrant à partir d'un instant de démarrage du moteur électrique 7.

Ainsi, l'étape de mesure E30 des valeurs d'intensité traversant le moteur électrique 7 est mise en oeuvre après la période transitoire de démarrage du moteur électrique 7 au cours de laquelle des fluctuations de la valeur d'intensité I peuvent être générées.

De cette manière, les valeurs d'intensité mesurées, lors de l'étape de mesure E30, sont fiables pour débuter la détermination de présence ou d'absence d'un point dur lors du déplacement du premier ouvrant 3a par rapport au cadre dormant 4.

Lors du déplacement du premier ouvrant 3a par rapport au cadre dormant 4, le procédé comprend une étape de détermination E40 de présence ou d'absence d'un point dur, en fonction d'une évolution des valeurs d'intensité I du courant électrique mesurées, lors de l'étape de mesure E30.

Ici, l'étape de détermination E40 de présence ou d'absence d'un point dur est mise en oeuvre au moyen de l'unité électronique de contrôle 10 et, en particulier, du microcontrôleur 36 de l'unité électronique de contrôle 10.

Un point dur est dû à un défaut de la fenêtre 2, tel que, par exemple, un frottement du premier ouvrant 3a par rapport à l'un des rails de coulissement 11a, 11b du cadre dormant 4 ou à un désalignement des organes du premier dispositif de verrouillage 21, en particulier de l'un des crochets de la tringle par rapport à l'une des gâches du cadre dormant 4, en position fermée du premier ouvrant 3a par rapport au care dormant 4.

Suite à la détermination d'un point dur, lors de l'étape de détermination E40, le procédé comprend une étape de modification E50 de la commande du moteur électrique 7 en limitant la tension d'alimentation Vbus, de sorte à maintenir une vitesse de rotation V de l'arbre de sortie du moteur électrique 7 en dessous d'une valeur seuil de vitesse maximale Vmax.

Ainsi, le procédé permet de limiter une augmentation d'une vitesse de déplacement du premier ouvrant 3a par rapport au cadre dormant 4 de la fenêtre 2 et, par conséquent, un arrêt intempestif, suite au franchissement d'un point dur sur la course de déplacement du premier ouvrant 3a par rapport au cadre dormant 4.

De cette manière, la modification de la commande du moteur électrique 7, lors de l'étape de modification E50, permet d'éviter un dépassement de la valeur seuil de vitesse maximale Vmax.

En outre, la modification de la commande du moteur électrique 7, lors de l'étape de modification E50, permet de garantir le verrouillage du premier ouvrant 3a par rapport au cadre dormant 4 dans la position fermée, en particulier au moyen du premier dispositif de verrouillage 21.

Avantageusement, la valeur seuil de vitesse maximale Vmax correspond à une vitesse de déplacement du premier ouvrant 3a par rapport au cadre dormant 4, pouvant être, par exemple, de l'ordre de 6,5m/s.

Ici, l'étape de modification E50 de la commande du moteur électrique 7 est mise en oeuvre par l'intermédiaire de l'unité électronique de contrôle 10.

Le point dur est déterminé, lors de l'étape de détermination E40, lorsque l'évolution des valeurs d'intensité I du courant électrique mesurées, lors de l'étape de mesure E30, présente un pic puis une chute des valeurs d'intensité I du courant électrique.

Un pic et une chute des valeurs d'intensité I du courant électrique correspondent respectivement à une variation brusque de valeurs d'intensité I du courant électrique consécutives pendant une période de temps courte, autrement dit sur une succession de quelques échantillons de valeurs d'intensité I, pouvant être, par exemple, de l'ordre de trois à dix échantillons mesurés respectivement toutes les cinq à vingt millisecondes.

Ici, la chute des valeurs d'intensité I du courant électrique correspond au relâchement du premier ouvrant 3a par rapport au cadre dormant 4 lors du franchissement du point dur.

Avantageusement, le point dur est déterminé, lors de l'étape de détermination E40, lorsque la chute des valeurs d'intensité I du courant électrique est supérieure ou égale à une valeur seuil d'intensité prédéterminée ΔI pendant une période de temps prédéterminée Tc.

A titre d'exemple nullement limitatif, la valeur seuil d'intensité prédéterminée ΔI peut être de l'ordre de dix milliampères pour une période de temps prédéterminée Tc de l'ordre de dix millisecondes.

Avantageusement, la tension d'alimentation Vbus limitée, lors de l'étape de modification E50 de la commande du moteur électrique 7, est supérieure ou égale à la valeur seuil de tension prédéterminée Umin, de sorte à maintenir une valeur d'intensité I minimale du courant électrique circulant dans les bobines 54 du moteur électrique 7.

A titre d'exemple nullement limitatif, la tension d'alimentation Vbus limitée, lors de l'étape de modification E50 de la commande du moteur électrique 7, est de l'ordre de 65V, soit 20% de la tension d'alimentation Vbus, qui est de 325V.

Avantageusement, le procédé comprend, en outre, au moins les étapes suivantes :
- mesure E60 d'une valeur de vitesse de rotation V d'un arbre de sortie du moteur électrique 7,
- comparaison E70 de la valeur de de vitesse de rotation V mesurée, lors de l'étape de mesure E60, à la valeur seuil de vitesse maximale Vmax,
- dans le cas où la valeur de vitesse de rotation V mesurée, lors de l'étape de mesure E60, est supérieure ou égale à la valeur seuil de vitesse maximale Vmax, détermination E80 d'une survitesse de rotation de l'arbre de sortie du moteur électrique 7, et
- suite à la détermination de la survitesse de rotation, lors de l'étape de détermination E80, et en l'absence de détermination d'un point dur, lors de l'étape de détermination E40, arrêt E90 du moteur électrique 7.

Ainsi, suite à la détermination de la survitesse de rotation, lors de l'étape de détermination E80, le procédé permet de garantir la sécurité des utilisateurs en arrêtant le déplacement du premier ouvrant 3a par rapport au cadre dormant 4, lors de l'étape d'arrêt E90 du moteur électrique 7.

Ici, l'étape de mesure E60 de la valeur de vitesse de rotation V est mise en oeuvre par l'intermédiaire du dispositif de comptage 24.

Ici, les étapes de comparaison E70, de détermination E80 et d'arrêt E90 sont mises en oeuvre par l'intermédiaire de l'unité électronique de contrôle 10.

Avantageusement, les étapes de mesure E60, de comparaison E70, de détermination E80 et d'arrêt E90 sont mises en oeuvre à partir de l'étape de commande E20 du moteur électrique 7 et, éventuellement, à partir de l'étape de démarrage E10 du moteur électrique 7.

Avantageusement, suite à l'arrêt du moteur électrique 7, lors de l'étape d'arrêt E90, le procédé comprend une étape de redémarrage E110 du moteur électrique 7, de sorte à déplacer le premier ouvrant 3a par rapport au cadre dormant 4.

Ainsi, l'étape de redémarrage E110 du moteur électrique 7 permet de tenter de terminer le déplacement du premier ouvrant 3a par rapport au cadre dormant 4.

Ici, l'étape de redémarrage E110 du moteur électrique 7 est mise en oeuvre par l'intermédiaire de l'unité électronique de contrôle 10.

Avantageusement, le procédé comprend, en outre, au moins l'étape suivante, préalable à l'étape de redémarrage E110 :
- comptage E100 d'un nombre de déterminations de la survitesse de rotation mises en oeuvre successivement au cours d'un déplacement du premier ouvrant 3a par rapport au cadre dormant 4.

En outre, l'étape de redémarrage E110 du moteur électrique 7 a lieu tant que le nombre de déterminations de la survitesse de rotation, compté à l'étape de comptage E100, est inférieur à une valeur seuil de comptage prédéterminée Cmax.

Ici, l'étape de comptage E100 est mise en oeuvre par l'intermédiaire de l'unité électronique de contrôle 10.

Avantageusement, dans le cas où le nombre de déterminations de la survitesse de rotation est égal à la valeur seuil de comptage prédéterminée Cmax, le procédé comprend une étape de signalement E120 d'un défaut de fonctionnement de la fenêtre 2.

Avantageusement, le signalement du défaut de fonctionnement de la fenêtre 2, lors de l'étape de signalement E120, est mis en oeuvre par l'intermédiaire de l'unité de commande locale 12 ou centrale 13, en particulier soit de manière visuelle, au travers des éléments d'affichage 40, soit de manière sonore, au moyen d'un avertisseur sonore, non représenté.

En variante, le signalement du défaut de fonctionnement de la fenêtre 2, lors de l'étape de signalement E120, est mis en oeuvre par l'intermédiaire de l'actionneur électromécanique 6 et, plus particulièrement, du moteur électrique 7, de manière sonore, en particulier par un son généré par une commande spécifique de celui-ci.

Avantageusement, le défaut de fonctionnement de la fenêtre 2 signalé, lors de l'étape de signalement E120, comprend un diagnostic d'un nouveau réglage de la fenêtre 2 et, en particulier, des éléments de coulissement de la fenêtre 2 permettant le déplacement du premier ouvrant 3a par rapport au cadre dormant 4.

Avantageusement, les valeurs seuils Umin, Vmax, ΔI, Cmax sont enregistrées dans la mémoire de l'unité électronique de contrôle 10 et, plus particulièrement, du microcontrôleur 36.

Grâce à la présente invention, le procédé permet de limiter une augmentation d'une vitesse de déplacement de l'ouvrant par rapport au cadre dormant de la fenêtre et, par conséquent, un arrêt intempestif, suite au franchissement d'un point dur sur une course de déplacement de l'ouvrant par rapport au cadre dormant.

De nombreuses modifications peuvent être apportées aux exemples de réalisation décrits précédemment sans sortir du cadre de l'invention défini par les revendications.

En variante, non représentée, le dispositif d'entraînement motorisé 5 peut être configuré pour déplacer par coulissement plusieurs ouvrants 3a, 3b au moyen de l'élément flexible 9, selon un même sens de déplacement ou selon des sens de déplacement opposés.

En variante, le moteur électrique 7 de l'actionneur électromécanique 6 peut être du type asynchrone ou à courant continu.

En variante, non représentée, l'actionneur électromécanique 6 est configuré pour être monté, autrement dit est monté, verticalement le long de l'un des montants latéraux 4c du cadre dormant 4 ou le long de l'un des montants latéraux 15c du premier ouvrant 3a.

En variante, non représentée, le deuxième ouvrant 3b est déplacé par coulissement par rapport au cadre dormant 4 au moyen d'un autre dispositif d'entraînement motorisé 5.

En variante, dans le cas où l'actionneur électromécanique 6 est alimenté en énergie électrique par une batterie, la tension d'alimentation électrique peut présenter, par exemple, une valeur de 24V ou de 12V.

A titre d'exemple nullement limitatif, la tension d'alimentation Vbus limitée minimale, lors de l'étape de démarrage E10 du moteur électrique 7, est de l'ordre de 1,2V, soit 5% de la tension d'alimentation Vbus, dans le cas où celle-ci est de 24V. En outre, la tension d'alimentation Vbus limitée, lors de l'étape de modification E50 de la commande du moteur électrique 7, est de l'ordre de 4,8V, soit 20% de la tension d'alimentation Vbus, dans le cas où celle-ci est de 24V.

En outre, les modes de réalisation et variantes envisagés peuvent être combinés pour générer de nouveaux modes de réalisation de l'invention défini par les revendications.

## Revendications

1. Procédé de commande en fonctionnement d'un dispositif d'entraînement motorisé (5) d'une fenêtre coulissante (2) pour un bâtiment,
la fenêtre (2) comprenant au moins :
- un cadre dormant (4), et
- un ouvrant (3a, 3b),
le dispositif d'entraînement motorisé (5) étant configuré pour déplacer l'ouvrant (3a) par rapport au cadre dormant (4),
le dispositif d'entraînement motorisé (5) comprenant au moins :
- un actionneur électromécanique (6), l'actionneur électromécanique (6) comprenant au moins un moteur électrique (7), et
- une unité électronique de contrôle (10),
l'unité électronique de contrôle (10) comprenant au moins :
- un dispositif de mesure (56) d'une valeur d'intensité (I) d'un courant électrique traversant le moteur électrique (7),
le procédé comprenant au moins les étapes suivantes :
- commande (E20) du moteur électrique (7) au moyen d'une tension d'alimentation (Vbus), de sorte à déplacer l'ouvrant (3a) par rapport au cadre dormant (4), et
- au cours du déplacement de l'ouvrant (3a) par rapport au cadre dormant (4), mesure (E30) de valeurs d'intensité (I) du courant électrique traversant le moteur électrique (7) par le dispositif de mesure (56),
**caractérisé en ce que** le procédé comprend au moins les étapes suivantes :
- lors du déplacement de l'ouvrant (3a) par rapport au cadre dormant (4), détermination (E40) de présence ou d'absence d'un point dur, en fonction d'une évolution des valeurs d'intensité (I) du courant électrique mesurées, lors de l'étape de mesure (E30), et
- suite à la détermination d'un point dur, lors de l'étape de détermination (E40), modification (E50) de la commande du moteur électrique (7) en limitant la tension d'alimentation (Vbus), de sorte à maintenir une vitesse de rotation d'un arbre de sortie du moteur électrique (7) en dessous d'une valeur seuil de vitesse maximale (Vmax),
et **en ce que** le point dur est déterminé, lors de l'étape de détermination (E40), lorsque l'évolution des valeurs d'intensité (I) du courant électrique mesurées, lors de l'étape de mesure (E30), présente un pic puis une chute des valeurs d'intensité (I) du courant électrique.

2. Procédé de commande en fonctionnement d'un dispositif d'entraînement motorisé (5) d'une fenêtre coulissante (2) pour un bâtiment selon la revendication 1, **caractérisé en ce que** le point dur est déterminé, lors de l'étape de détermination (E40), lorsque la chute des valeurs d'intensité (I) du courant électrique est supérieure ou égale à une valeur seuil de courant prédéterminée (ΔI) pendant une période de temps prédéterminée (Tc).

3. Procédé de commande en fonctionnement d'un dispositif d'entraînement motorisé (5) d'une fenêtre coulissante (2) pour un bâtiment selon la revendication 1 ou selon la revendication 2, **caractérisé en ce que**, suite à l'étape de commande (E20) du moteur électrique (7), une mesure d'une valeur d'intensité (I) du courant électrique est mise en oeuvre périodiquement, lors de l'étape de mesure (E30).

4. Procédé de commande en fonctionnement d'un dispositif d'entraînement motorisé (5) d'une fenêtre coulissante (2) pour un bâtiment selon l'une quelconque des revendications 1 à 3, **caractérisé en ce que** la tension d'alimentation (Vbus) limitée, lors de l'étape de modification (E50) de la commande du moteur électrique (7), est supérieure ou égale à une valeur seuil de tension prédéterminée (Umin), de sorte à maintenir une valeur d'intensité (I) minimale du courant électrique circulant dans des bobines (54) du moteur électrique (7).

5. Procédé de commande en fonctionnement d'un dispositif d'entraînement motorisé (5) d'une fenêtre coulissante (2) pour un bâtiment selon l'une quelconque des revendications 1 à 4, **caractérisé en ce que** l'étape de mesure (E30) des valeurs d'intensité (I) du courant électrique est mise en oeuvre suite à l'écoulement d'une période de temps prédéterminée (Td) démarrant à partir d'un instant de démarrage du moteur électrique (7).

6. Procédé de commande en fonctionnement d'un dispositif d'entraînement motorisé (5) d'une fenêtre coulissante (2) pour un bâtiment selon l'une quelconque des revendications 1 à 5, **caractérisé en ce que** le procédé comprend, en outre, au moins les étapes suivantes :
- mesure (E60) d'une valeur de vitesse de rotation (V) d'un arbre de sortie du moteur électrique (7),
- comparaison (E70) de la valeur de de vitesse de rotation (V) mesurée, lors de l'étape de mesure (E60), à la valeur seuil de vitesse maximale (Vmax),
- dans le cas où la valeur de vitesse de rotation (V) mesurée, lors de l'étape de mesure (E60), est supérieure ou égale à la valeur seuil de vitesse maximale (Vmax), détermination (E80) d'une survitesse de rotation de l'arbre de sortie du moteur électrique (7), et
- suite à la détermination de la survitesse de rotation, lors de l'étape de détermination (E80), et en l'absence de détermination d'un point dur, lors de l'étape de détermination (E40), arrêt (E90) du moteur électrique (7).

7. Procédé de commande en fonctionnement d'un dispositif d'entraînement motorisé (5) d'une fenêtre coulissante (2) pour un bâtiment selon la revendication 6, **caractérisé en ce que**, suite à l'arrêt du moteur électrique (7), lors de l'étape d'arrêt (E90), le procédé comprend une étape de redémarrage (E110) du moteur électrique (7), de sorte à déplacer l'ouvrant (3a) par rapport au cadre dormant (4).

8. Procédé de commande en fonctionnement d'un dispositif d'entraînement motorisé (5) d'une fenêtre coulissante (2) pour un bâtiment selon la revendication 7, **caractérisé en ce que** le procédé comprend, en outre, au moins l'étape suivante, préalable à l'étape de redémarrage (E110) :
- comptage (E100) d'un nombre de déterminations de la survitesse de rotation mises en oeuvre successivement au cours d'un déplacement de l'ouvrant (3a) par rapport au cadre dormant (4),
et **en ce que** l'étape de redémarrage (E110) du moteur électrique (7) a lieu tant que le nombre de déterminations de la survitesse de rotation, compté à l'étape de comptage (E100), est inférieur à une valeur seuil de comptage prédéterminée (Cmax).

9. Procédé de commande en fonctionnement d'un dispositif d'entraînement motorisé (5) d'une fenêtre coulissante (2) pour un bâtiment selon la revendication 8, **caractérisé en ce que**, dans le cas où le nombre de déterminations de la survitesse de rotation est égal à la valeur seuil de comptage prédéterminée (Cmax), le procédé comprend une étape de signalement (E120) d'un défaut de fonctionnement de la fenêtre (2).

10. Fenêtre coulissante (2) pour un bâtiment,
la fenêtre (2) comprenant au moins :
- un cadre dormant (4),
- un ouvrant (3a, 3b), et
- un dispositif d'entraînement motorisé (5) configuré pour déplacer par coulissement l'ouvrant (3a) par rapport au cadre dormant (4),
le dispositif d'entraînement motorisé (5) comprenant au moins :
- un actionneur électromécanique (6), l'actionneur électromécanique (6) comprenant au moins un moteur électrique (7), et
- une unité électronique de contrôle (10),
l'unité électronique de contrôle (10) comprenant au moins :
- un dispositif de mesure (56) d'une valeur d'intensité (I) d'un courant électrique traversant le moteur électrique (7),
**caractérisée en ce que** l'unité électronique de contrôle (10) du dispositif d'entraînement motorisé (5) est configurée pour mettre en oeuvre le procédé selon l'une quelconque des revendications 1 à 9.

11. Fenêtre coulissante (2) pour un bâtiment selon la revendication 10, **caractérisée en ce que** le dispositif d'entraînement motorisé (5) comprend, en outre, un bras d'entraînement (18), le bras d'entraînement (18) étant configuré pour être relié, d'une part, à un cadre (15) de l'ouvrant (3a) et, d'autre part, à un élément flexible (9), le bras d'entraînement (18) et l'élément flexible (9) étant configurés pour entraîner en déplacement l'ouvrant (3a) par rapport au cadre dormant (4), lorsque l'actionneur électromécanique (6) est activé électriquement.

12. Installation domotique, **caractérisée en ce que** ladite installation comprend une fenêtre coulissante (2) conforme à l'une quelconque des revendications 10 et 11.

## Patentansprüche

1. Steuerverfahren im Betrieb einer motorisierten Antriebsvorrichtung (5) eines Schiebefensters (2) für ein Gebäude,
das Fenster (2) mindestens umfassend:
- eine Einfassung (4), und
- einen Flügel (3a, 3b),
wobei die motorisierte Antriebsvorrichtung (5) konfiguriert ist, um den Flügel (3a) in Bezug auf die Einfassung (4) kippend zu bewegen,
die motorisierte Antriebsvorrichtung (5) mindestens umfassend:
- einen elektromechanischen Stellantrieb (6), der elektromechanische Stellantrieb (6) umfassend mindestens einen Elektromotor (7), und
- eine elektronische Steuereinheit (10),
die elektronische Steuereinheit (10) mindestens umfassend:
- eine Vorrichtung (56) zum Messen eines Stromstärkewerts (I) eines elektrischen Stroms, der durch den Elektromotor (7) fließt,
das Verfahren umfassend mindestens die folgenden Schritte:
- Steuern (E20) des Elektromotors (7) mittels einer Versorgungsspannung (Vbus), um den Flügel (3a) in Bezug auf die Einfassung (4) zu bewegen, und
- während der Bewegung des Flügels (3a) in Bezug auf die Einfassung (4), Messen (E30) von Stromstärkewerten (I) des elektrischen Stroms, der durch den Elektromotor (7) fließt, durch die Messvorrichtung (56),
**dadurch gekennzeichnet, dass** das Verfahren mindestens die folgenden Schritte umfasst:
- beim Bewegen des Flügels (3a) in Bezug auf die Einfassung (4), Bestimmen (E40) des Vorhandenseins oder Nichtvorhandenseins eines harten Punkts abhängig von einer Entwicklung der Werte der Intensität (I) des elektrischen Stroms, die in dem Messschritt (E30) gemessen werden, und
- im Anschluss an die Bestimmung eines harten Punkts, während des Bestimmungsschritts (E40), Modifikation (E50) der Steuerung des Elektromotors (7) durch Begrenzen der Versorgungsspannung (Vbus), um eine Drehgeschwindigkeit einer Ausgangswelle des Elektromotors (7) unter einem Schwellenwert für die maximale Geschwindigkeit (Vmax) zu halten,
und dass der harte Punkt in dem Bestimmungsschritt (E40) bestimmt wird, wenn die Entwicklung der Stromstärkewerte (I) des gemessenen elektrischen Stroms in dem Bestimmungsschritt (E30) eine Spitze und dann einen Abfall der Stromstärkewerte (I) des elektrischen Stroms aufweist.

2. Verfahren zum Steuern des Betriebs einer motorisierten Antriebsvorrichtung (5) eines Schiebefensters (2) für ein Gebäude nach Anspruch 1, **dadurch gekennzeichnet, dass** der harte Punkt in dem Bestimmungsschritt (E40) bestimmt wird, wenn der Abfall der Stromstärkewerte (I) des elektrischen Stroms während einer vorbestimmten Zeitdauer (Tc) größer als oder gleich wie ein vorbestimmter Stromschwellenwert (ΔI) ist.

3. Verfahren zum Steuern des Betriebs einer motorisierten Antriebsvorrichtung (5) eines Schiebefensters (2) für ein Gebäude nach Anspruch 1 oder nach Anspruch 2, **gekennzeichnet durch** dass nach dem Schritt eines Steuerns (E20) des Elektromotors (7) periodisch eine Messung eines Stromstärkewerts (I) des elektrischen Stroms in dem Messschritt (E30) durchgeführt wird.

4. Verfahren zum Steuern des Betriebs einer motorisierten Antriebsvorrichtung (5) eines Schiebefensters (2) für ein Gebäude nach einem der Ansprüche 1 bis 3 im Betrieb, **dadurch gekennzeichnet, dass** die begrenzte Versorgungsspannung (Vbus) bei dem Änderungsschritt (E50) der Steuerung des Elektromotors (7) größer als oder gleich wie ein vorbestimmter Spannungsschwellenwert (Umin) ist, um einen minimaler Stromstärkewert (I) des elektrischen Stroms, der in Spulen (54) des Elektromotors (7) fließt, aufrechtzuerhalten.

5. Verfahren zum Steuern des Betriebs einer motorisierten Antriebsvorrichtung (5) eines Schiebefensters (2) für ein Gebäude nach einem der Ansprüche 1 bis 4, **dadurch gekennzeichnet, dass** der Schritt eines Messens (E30) der Intensitätswerte (I) des elektrischen Stroms nach Ablauf einer vorbestimmten Zeitperiode (Td), die von einem Startzeitpunkt des Elektromotors (7) aus beginnt, durchgeführt wird.

6. Verfahren zum Steuern des Betriebs einer motorisierten Antriebsvorrichtung (5) eines Schiebefensters (2) für ein Gebäude nach einem der Ansprüche 1 bis 5, **dadurch gekennzeichnet, dass** das Verfahren ferner mindestens die folgenden Schritte umfasst:
- Messen (E60) eines Drehgeschwindigkeitswerts (V) einer Ausgangswelle des Elektromotors (7),
- Vergleichen (E70) des in dem Messschritt (E60) gemessenen Drehgeschwindigkeitswerts (V) mit dem Schwellenwert für maximale Geschwindigkeit (Vmax),
- in dem Fall, dass der während des Messschritts (E60) gemessene Wert der Drehgeschwindigkeit (V) größer als oder gleich wie der Schwellenwert für maximale Geschwindigkeit (Vmax) ist, Bestimmen (E80) einer Überdrehzahl der Ausgangswelle des Elektromotors (7), und
- nach der Bestimmung der Überdrehzahl in dem Bestimmungsschritt (E80) und bei Nichtbestimmung eines harten Punkts in dem Bestimmungsschritt (E40), Anhalten (E90) des Elektromotors (7).

7. Verfahren zum Steuern des Betriebs einer motorisierten Antriebsvorrichtung (5) eines Schiebefensters (2) für ein Gebäude nach Anspruch 6, **dadurch gekennzeichnet, dass** nach Anhalten des Elektroantriebs (7) bei dem Anhalteschritt (E90) das Verfahren einen Schritt eines Neustarts (E110) des Elektromotors (7) umfasst, um den Flügel (3a) in Bezug auf die Einfassung (4) zu bewegen.

8. Verfahren zum Steuern des Betriebs einer motorisierten Antriebsvorrichtung (5) eines Schiebefensters (2) für ein Gebäude nach Anspruch 7, **dadurch gekennzeichnet, dass** das Verfahren ferner mindestens den folgenden Schritt vor dem Schritt eines Neustarts (E110) umfasst:
- Zählen (E100) einer Anzahl von Drehübergeschwindigkeitsbestimmungen, die nacheinander während einer Bewegung des Flügels (3a) in Bezug auf die Einfassung (4) implementiert werden,
und dass der Schritt eines Neustarts (E110) des Elektromotors (7) erfolgt, solange die Anzahl der im Zählschritt (E100) gezählten Bestimmungen der Überdrehzahl kleiner als ein vorbestimmter Zählschwellenwert (Cmax) ist.

9. Verfahren zum Steuern des Betriebs einer motorisierten Antriebsvorrichtung (5) eines Schiebefensters (2) für ein Gebäude nach Anspruch 8, **dadurch gekennzeichnet, dass** für den Fall, dass die Anzahl der Drehübergeschwindigkeitsbestimmungen gleich wie der vorbestimmten Zählschwellenwert (Cmax) ist, das Verfahren einen Schritt eines Meldens (E120) einer Funktionsstörung des Fensters (2) umfasst.

10. Schiebefenster (2) für ein Gebäude,
das Fenster (2) mindestens umfassend:
- eine Einfassung (4),
- einen Flügel (3a, 3b), und
- eine motorisierte Antriebsvorrichtung (5), die konfiguriert ist, um den Flügel (3a) in Bezug auf die Einfassung (4) kippend zu bewegen,
die motorisierte Antriebsvorrichtung (5) mindestens umfassend:
- einen elektromechanischen Stellantrieb (6), der elektromechanische Stellantrieb (6) umfassend mindestens einen Elektromotor (7), und
- eine elektronische Steuereinheit (10),
die elektronische Steuereinheit (10) mindestens umfassend:
- eine Vorrichtung (56) zum Messen eines Stromstärkewerts (I) eines elektrischen Stroms, der durch den Elektromotor (7) fließt,
**dadurch gekennzeichnet, dass** die elektronische Steuereinheit (10) der motorisierten Antriebsvorrichtung (5) konfiguriert ist, um das Verfahren nach einem der Ansprüche 1 bis 9 zu implementieren.

11. Schiebefenster (2) für ein Gebäude nach Anspruch 10, **dadurch gekennzeichnet, dass** die motorisierte Antriebsvorrichtung (5) ferner einen Antriebsarm (18) umfasst, wobei der Antriebsarm (18) konfiguriert ist, um einerseits mit einem Rahmen (15) des Flügels (3a) und andererseits mit einem flexiblen Element (9) verbunden zu sein, wobei der Antriebsarm (18) und das flexible Element (9) konfiguriert sind, um den Flügel (3a) in Bezug auf die Einfassung (4) zu bewegen, wenn der elektromechanische Stellantrieb (6) elektrisch aktiviert wird.

12. Hausautomationsanlage, **dadurch gekennzeichnet, dass** die Installation ein Schiebefenster (2) nach einem der Ansprüche 10 und 11 umfasst.

## Claims

1. A method of controlling operation of a motorised driving device (5) of a sliding window (2) for a building,
the window (2) comprising at least:
- a frame (4), and
- a sash (3a, 3b),
the motorised driving device (5) being configured to move the sash (3) with respect to the frame (4),
the motorised driving device (5) comprising at least:
- an electromechanical actuator (6), the electromechanical actuator (6) comprising at least one electric motor (7), and
- an electronic control unit (10),
the electronic control unit (10) comprising at least:
- a device (56) for measuring a value of an intensity (I) of an electric current flowing through the electric motor (7),
the method comprising at least the following steps:
- controlling (E20) the electric motor (7) by means of a supply voltage (Vbus), so as to move the sash (3a) with respect to the frame (4), and
- during the movement of the sash (3a) with respect to the frame (4), measuring (E30) values of the intensity (I) of the electric current flowing through the electric motor (7) by the measuring device (56),
**characterised in that** the method comprises at least the following steps:
- during the movement of the sash (3a) with respect to the frame (4), determining (E40) the presence or absence of a hard point, as a function of a change in the values of the intensity (I) of the electric current measured, during the measuring step (E30), and
- following the determination of a hard point, during the determining step (E40), modifying (E50) the command of the electric motor (7) by limiting the supply voltage (Vbus), so as to maintain a rotational speed of an output shaft of the electric motor (7) below a maximum speed threshold value (Vmax),
and **in that** the hard point is determined, during the determining step (E40), when the change of the values of the intensity (I) of the electric current measured, during the measuring step (E30), has a peak and then a fall in the values of the intensity (I) of the electric current.

2. The method of controlling operation of a motorised driving device (5) of a sliding window (2) for a building according to claim 1, **characterised in that** the hard point is determined, during the determining step (E40), when the fall in the values of the intensity (I) of the electric current is greater than or equal to a predetermined current threshold value (ΔI) for a predetermined period of time (Tc).

3. The method of controlling operation of a motorised driving device (5) of a sliding window (2) for a building according to claim 1 or according to claim 2, **characterised in that**, following the controlling step (E20) of the electric motor (7), a measurement of a value of the intensity (I) of the electric current is implemented periodically, during the measuring step (E30).

4. The method of controlling operation of a motorised driving device (5) of a sliding window (2) for a building according to any one of claims 1 to 3, **characterised in that** the supply voltage (Vbus) limited, during the modifying step (E50) of the command of the electric motor (7), is greater than or equal to a predetermined voltage threshold value (Umin), so that a minimum value of the intensity (I) of the electric current circulating in coils (54) of the electric motor (7) is maintained.

5. The method of controlling operation of a motorised driving device (5) of a sliding window (2) for a building according to any one of claims 1 to 4, **characterised in that** the measuring step (E30) of the values of the intensity (I) of the electric current is implemented following the elapse of a predetermined period of time (Td) beginning at an instant when the electric motor (7) is started.

6. The method of controlling operation of a motorised driving device (5) of a sliding window (2) for a building according to any one of claims 1 to 5, **characterised in that** the method further comprises at least the following steps:
- measuring (E60) of a value of a rotational speed (V) of an output shaft of the electric motor (7),
- comparing (E70) of the value of the rotational speed (V) measured, during the measuring step (E60), with the maximum speed threshold value (Vmax),
- in the case where the value of the rotational speed (V) measured, during the measuring step (E60), is greater than or equal to the maximum speed threshold value (Vmax), determining (E80) a rotational overspeed of the output shaft of the electric motor (7), and
- following the determination of the rotational overspeed, during the determining step (E80), and if no hard point is determined, during the determining step (E40), stopping (E90) the electric motor (7).

7. The method of controlling operation of a motorised driving device (5) of a sliding window (2) for a building according to claim 6, **characterised in that**, following the stopping of the electric motor (7), during the stopping step (E90), the method comprises a restarting step (E110) of the electric motor (7), so as to move the sash (3a) with respect to the frame (4).

8. The method of controlling operation of a motorised driving device (5) of a sliding window (2) for a building according to claim 7, **characterised in that** the method further comprises at least the following step, prior to the restarting step (E110):
- counting (E100) of a number of rotational overspeed determinations successively implemented during a movement of the sash (3a) with respect to the frame (4),
and **in that** the restarting step (E110) of the electric motor (7) takes place as long as the number of rotational overspeed determinations counted, during the counting step (E100), is less than a predetermined counting threshold value (Cmax).

9. The method of controlling operation of a motorised driving device (5) of a sliding window (2) for a building according to claim 8, **characterised in that**, in the case where the number of rotational overspeed determinations is equal to the predetermined counting threshold value (Cmax), the method comprises a signalling step (E120) of a malfunction of the window (2).

10. A sliding window (2) for a building,
the window (2) comprising at least:
- a frame (4),
- a sash (3a, 3b), and
- a motorised driving device (5) configured to move the sash (3a) by sliding it with respect to the frame (4),
the motorised driving device (5) comprising at least:
- an electromechanical actuator (6), the electromechanical actuator (6) comprising at least one electric motor (7), and
- an electronic control unit (10),
the electronic control unit (10) comprising at least:
- a device (56) for measuring a value of an intensity (I) of an electric current flowing through the electric motor (7),
**characterised in that** the electronic control unit (10) of the motorised driving device (5) is configured to implement the method according to any one of claims 1 to 9.

11. A sliding window (2) for a building according to claim 10, **characterised in that** the motorised driving device (5) further comprises a drive arm (18), the drive arm (18) being configured to be connected, on the one hand, to a frame (15) of the sash (3a) and, on the other hand, to a flexible element (9), the drive arm (18) and the flexible element (9) being configured to movably drive the sash (3a) with respect to the frame (4), when the electromechanical actuator (6) is electrically activated.

12. A home automation installation, **characterised in that** said installation comprises a sliding window (2) according to any one of claims 10 to 11.
